(19)

Europäisches Patentamt
European Patent Office
Office européen des brevets

(11)  **EP 4 614 893 A1**

(12)  **EUROPEAN PATENT APPLICATION**
published in accordance with Art. 153(4) EPC

(43) Date of publication:
**10.09.2025   Bulletin 2025/37**

(21) Application number: **22963959.6**

(22) Date of filing: **03.11.2022**

(51) International Patent Classification (IPC):
*H04L 27/00* *(2006.01)*

(52) Cooperative Patent Classification (CPC):
**H04L 27/00**

(86) International application number:
**PCT/CN2022/129646**

(87) International publication number:
**WO 2024/092649 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• HU, Yi
  **Dongguan, Guangdong 523860 (CN)**
• LI, Haitao
  **Dongguan, Guangdong 523860 (CN)**

(74) Representative: **Aldridge, Henry Alexander et al
Venner Shipley LLP
200 Aldersgate
London EC1A 4HD (GB)**

(54)  **COMMUNICATION METHOD, APPARATUS AND DEVICE, AND STORAGE MEDIUM, CHIP,
PRODUCT AND PROGRAM**

(57)    Provided in the embodiments of the present application are a communication method, apparatus and device, and a storage medium, a chip, a product and a program. The method comprises: a terminal device triggering the reporting of first global navigation satellite system (GNSS) assistance information.

A terminal device triggers a reporting of the first GNSS assistance information — S701

**FIG. 7**

EP 4 614 893 A1

**Description**

TECHNICAL FIELD

Embodiments of the present disclosure relate to the technical field of communication, and in particular to a communication method, an apparatus, a device, a storage medium, a chip, a product, and a program.

BACKGROUND

The terminal device may perform Global Navigation Satellite System (GNSS) measurement in a Radio Resource Control (RRC) connected (ACTIVE) state, an RRC IDLE state, or an RRC INACTIVE state to obtain position information.
How to perform GNSS measurement by the terminal device has been a concern in the field.

SUMMARY

Embodiments of the present disclosure provide a communication method, an apparatus, a device, a storage medium, a chip, a product, and a program.
According to the first aspect, an embodiment of the present disclosure provides a communication method. The method includes the following operation.
A terminal device triggers a reporting of the first GNSS assistance information.
According to the second aspect, an embodiment of the present disclosure provides a communication method. The method includes the following operation.
A network device receives the first GNSS assistance information. The first GNSS assistance information is triggered and reported by a terminal device.
According to the third aspect, an embodiment of the present disclosure provides a communication apparatus. The communication apparatus includes a communication unit.
The communication unit is configured to trigger a reporting of the first GNSS assistance information.
According to the fourth aspect, an embodiment of the present disclosure provides a communication apparatus. The communication apparatus includes a communication unit.
The communication unit is configured to receive the first GNSS assistance information. The first GNSS assistance information is triggered and reported by a terminal device.
According to the fifth aspect, an embodiment of the present disclosure provides a communication device. The communication device includes a processor and a memory.
The memory is configured to store a computer program executable on the processor.
The processor is configured to perform the program to implement the method of the first aspect or the second aspect.
According to the sixth aspect, an embodiment of the present disclosure provides a computer storage medium. The computer storage medium stores one or more programs, and the one or more programs are executable on one or more processors to implement the method of the first aspect or the second aspect.
According to the seventh aspect, an embodiment of the present disclosure provides a chip. The chip includes a processor for invoking and executing a computer program from a memory to implement the method of the first aspect or the second aspect.
According to the eighth aspect, an embodiment of the present disclosure provides a computer program product. The computer program product includes a computer storage medium storing a computer program. The computer program includes instructions executable by at least one processor that, when executed by the at least one processor, implement the method of the first aspect or the second aspect.
According to the ninth aspect, an embodiment of the present disclosure provides a computer program. The computer program causes a computer to perform the method of the first aspect or the second aspect.
In the embodiments of the present disclosure, the terminal device triggers the reporting of the first GNSS assistance information. In this way, the network device can instruct the terminal device to perform GNSS measurement at an appropriate time according to the first GNSS assistance information, thereby reducing the loss of data information caused by the fact that the terminal device is unable to receive the data information during the measurement when the network device transmits data information to the terminal device during the measurement, and further, the communication method provided by the present disclosure can improve the reliability of information transmission.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure.

FIG. 1 is a schematic diagram of an application scenario according to an embodiment of the present disclosure.
FIG. 2 is a schematic diagram of an architecture of a communication system according to an embodiment of the present disclosure.
FIG. 3 is a schematic diagram of an architecture of another communication system according to an embodiment of the present disclosure.
FIG. 4 is a schematic diagram of a Non Terrestrial Network (NTN) scenario based on a transparent payload satellite according to an embodiment of the present disclosure.
FIG. 5 is a schematic diagram of a NTN scenario based on a regenerative payload satellite according to an embodiment of the present disclosure.
FIG. 6 is a schematic diagram of a method of time synchronization on a network device side.
FIG. 7 is a flowchart of a communication method according to an embodiment of the present disclosure.
FIG. 8 is a flowchart of another communication method according to an embodiment of the present disclosure.
FIG. 9 is a flowchart of another communication method according to an embodiment of the present disclosure.
FIG. 10 is a flowchart of another communication method according to an embodiment of the present disclosure.
FIG. 11 is a flowchart of a communication method according to another embodiment of the present disclosure.
FIG. 12 is a schematic diagram of the structure and composition of an communication apparatus according to an embodiment of the present disclosure.
[0034] FIG. 13 is a schematic diagram of the structure and composition of another communication apparatus according to an embodiment of the present disclosure.
FIG. 14 is a schematic structural diagram of a communication device according to an embodiment of the present disclosure.
FIG. 15 is a schematic structural diagram of a chip according to an embodiment of the present disclosure.

DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative work fall within the scope of protection of the present disclosure. The technical solutions described in the embodiments of the present disclosure may be arbitrarily combined as long as there is no conflict. In the description of the present disclosure, "multiple" means two or more unless specifically defined otherwise.

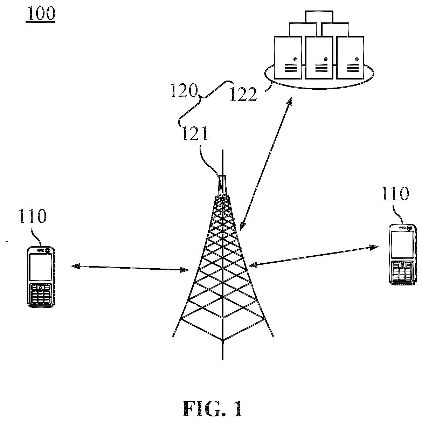

FIG. 1 is a schematic diagram of an application scenario according to an embodiment of the present disclosure. As illustrated in FIG. 1, the communication system 100 may include terminal devices 110 and a network device 120. The network device 120 may communicate with the terminal device 110 through an air interface. Multi-service transmission is supported between the terminal devices 110 and the network device 120.
It should be understood that the embodiments of the present disclosure are only illustrated with reference to the communication system 100, but the embodiments of the present disclosure is not limited thereto. That is, the technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolutional system of the NR system, a LTE-based access to unlicensed spectrum (LTE-U) system, a NR-based access to unlicensed spectrum (NR-U) system, a Universal Mobile Telecommunication System (UMTS), a Wireless Local Area Networks (WLAN), a Wireless Fidelity (WiFi), a LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, or future communication systems (for example, 6G, 7G communication systems), etc.
The network device 120 in the embodiments of the present disclosure may include an access network device 121 and/or a core network device 122. The access network device may provide communication coverage for a particular geographic area and may communicate with terminal devices 110 (for example, User Equipment (UE)) located within that coverage area.
The terminal device in the present disclosure is a device with wireless communication function, which may be deployed on land (for example, indoor or outdoor, handheld or vehicle-mounted). The terminal device may be deployed on the water (for example, on a ship). The terminal device may be deployed in the air (for example, on aircraft, balloons, satellites, etc.). The terminal device in the present disclosure may be referred to as a UE, a Mobile Station (MS), a Mobile Terminal (MT), a subscriber unit, a subscriber station, a mobile stage, a remote station, a remote terminal, a mobile device, a user terminal, a terminal, a wireless communication device, a user agent, or a user apparatus. The terminal device may include one or a combination of at least two of: an Internet of Things (IoT) device, a satellite terminal, a Wireless Local Loop (WLL) station, a Personal Digital Assistant (PDA) , a handheld device with the wireless communication function, a computing device or other processing device connected to a wireless modem, a server, a mobile phone, a tablet (Pad), a computer with the wireless transceiver function, a handheld computer, a desktop computer, a PDA, a portable media player, a smart speaker, a navigation device, a smart watch, smart glasses, a smart necklace and other wearable devices, a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a vehicle, a vehicle-mounted device, a vehicle-mounted module in a Internet of Vehicles, a wireless modem, a handheld device, a Customer Premise Equipment system, CPE), a smart home appliances, etc.

Alternatively, the terminal devices 110 may be any terminal device, including but not limited to terminal devices that use a wired or wireless to be connected to the network device 120 or other terminal devices.

Alternatively, the terminal device 110 may be used for Device to Device (D2D) communication.

The access network device 121 may include one or a combination of at least two of: an Evolutional Node B (eNB or eNodeB) in a Long Term Evolution (LTE) system, a Next Generation Radio Access Network (NG RAN) device, a base station (gNB) in the NR system, a small station, a micro station, a radio controller in a Cloud Radio Access Network (CRAN), an access point of Wireless-Fidelity (Wi-Fi), a transmission reception point (TRP), a relay station, an access point, a vehicle-mounted device, a wearable device, a hub, a switch, a bridge, a router, a network device in the future evolutional Public Land Mobile Network (PLMN), etc.

The core network device 122 may be a 5G Core (5GC) device. The core network device 122 may include one or a combination of at least two of: an Access and Mobility Management Function (AMF), an Authentication Server Function (AUSF), a User Plane Function (UPF), a Session Management Function (SMF), a Location Management Function (LMF) and a Policy Control Function (PCF). In other embodiments, the core network device may also be an Evolved Packet Core (EPC) device of the LTE network, for example, a Session Management Function + Core Packet Gateway (SMF + PGW-C) device. It should be understood that the SMF + PGW-C can simultaneously implement functions that the SMF and PGW-C can implement. In the process of network evolution, the core network device 122 may be called by another name, or a new network entity may be formed by dividing the functions of the core network, which is not limited by the embodiments of the present disclosure.

The respective function units in the communication system 100 may also establish a connection between each other through a next generation (NG) network interface to achieve communication.

For example, the terminal device establishes an air interface connection with the access network device through an NR interface to transmit user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with the data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one base station, one core network device, and two terminal devices. In some embodiments, the wireless communication system 100 may include multiple base station devices, and the coverage range of each base station may include another number of terminal devices, which is not limited in the embodiments of the present disclosure.

3GPP is studying the Non Terrestrial Network (NTN) technology. The NTN technology generally uses satellite communication to provide communication services to terrestrial users. Compared with terrestrial cellular communication, the satellite communication has many unique advantages. First of all, the satellite communication is not restricted by the region of the user. For example, the general land communication cannot cover areas such as oceans, mountains, deserts, etc. where communication devices cannot be installed or where communication coverage is not done due to sparse population. For the satellite communication, because a satellite can cover a large area of the ground, and the satellite can orbit around the earth, theoretically every corner of the earth can be covered by satellite communication. Secondly, the satellite communication can produce great social value. The satellite communication can be covered at a lower cost in remote mountainous areas, poor and backward countries or regions, so that people in these areas can enjoy advanced voice communication and mobile Internet technology, which is conducive to narrowing the digital divide with developed regions and promoting the development of these regions. Thirdly, the satellite communication can cover a long distance, and the cost of communication does not increase significantly as the communication distance increases. Finally, the satellite communication has high stability and is not limited by natural disasters.

The NTN technology may be combined with various communication systems. For example, the NTN technology may be combined with the NR system to be an NR-NTN system. As another example, the NTN technology may be combined with an IoT system to be an IoT-NTN system. As an example, the IoT-NTN system may include an NB-IoT-NTN system and an eMTC-NTN system.

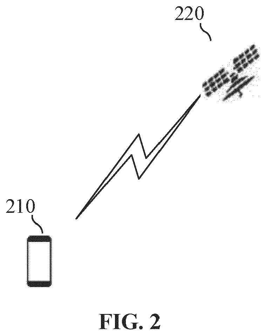

FIG. 2 is a schematic diagram of an architecture of a communication system according to an embodiment of the present disclosure. As illustrated in FIG. 2, the communication system includes a terminal device 210 and a satellite 220, and wireless communication may be performed between the terminal device 210 and the satellite 220. The network formed between the terminal device 210 and the satellite 220 may also be referred to as an NTN. In the architecture of the communication system illustrated in FIG. 2, the satellite 220 may have the function of a base station, and the terminal device 210 and the satellite 220 may communicate directly. In the architecture of the system, the satellite 220 may be referred to as a network device. In some embodiments of the present disclosure, the communication system may include multiple network devices 220, and the coverage range of each network device 220 may include another number of terminal devices, which is not limited in the embodiments of the present disclosure.

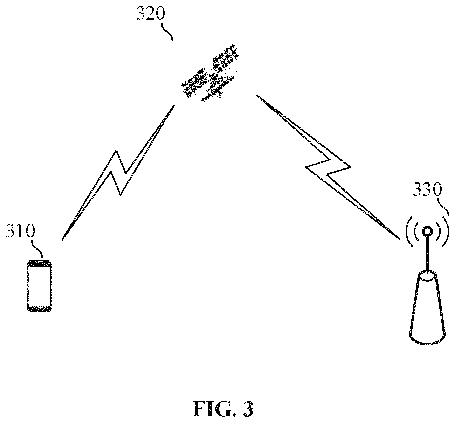

FIG. 3 is a schematic diagram of an architecture of another communication system according to an embodiment of the present disclosure. As illustrated in FIG. 3, the communication system includes a terminal device 310, a satellite 320, and a base station 330, wireless communication may be performed between the terminal device 310 and the satellite 320, and communication may be performed between the satellite 320 and the base station 330. The network formed among the terminal device 310, the satellite 320, and the base station 330 may also be referred to as an NTN. In the architecture of the communication system illustrated in FIG. 3, the satellite 320 may not have the function of the base station, and communication between the terminal device 310 and the base station 330 requires transit through the satellite 320. In the architecture of the system, the base station 330 may be referred to as a network device. In some embodiments of the present disclosure, the communication system may include multiple network devices 330, and the coverage range of each network device 330 may include another number of terminal devices, which is not limited in the embodiments of the present disclosure. The network device 330 may be the network device 120 illustrated in FIG. 1.

It should be understood that the above satellite 220 or satellite 320 include, but are not limited to, an Low-Earth Orbit (LEO) satellite, a Medium-Earth Orbit (MEO) satellite, a Geostationary Earth Orbit (GEO) satellite, a High Elliptical Orbit (HEO) satellite, and the like. The satellite may use multiple beams to cover the ground, for example, a satellite may form dozens or even hundreds of beams to cover the ground. In other words, a satellite beam may cover a ground area with a diameter of tens to hundreds of kilometers to ensure the coverage of the satellite and increase the system capacity of the entire satellite communication system.

As an example, the altitude range of the LEO satellite may be 500 kilometers to 1,500 kilometers, the orbital period of the LEO satellite may be about 1.5 hours to 2 hours, the signal propagation delay of single-hop communication between users may generally be less than 20 milliseconds, and the maximum satellite visibility time may be 20 minutes. The LEO satellite has short signal propagation distances and low link losses, and does not require high transmission power of the user terminal. The orbital altitude of the GEO satellite may be 35,786 km, the rotation period around the earth may be 24 hours, and the signal propagation delay of single-hop communication between users may generally be 250 milliseconds.

In order to ensure the coverage of the satellite and improve the system capacity of the entire satellite communication system, a satellite uses multiple beams to cover the ground. One satellite may form dozens or even hundreds of beams to cover the ground. One satellite beam may cover a ground area with a diameter of tens to hundreds of kilometers.

It should be noted that FIG. 1 to FIG. 3 illustrate systems to which the present disclosure is applicable only by way of example, and of course, the methods in the embodiments of the present disclosure may also be applied to other systems. Further, the terms "system" and "network" are often used interchangeably in the present disclosure. In the present disclosure, the term "and/or" is only used for describing an association relationship between association objects, which means that there may be three relationships, for example, A and/or B, which may mean that A exists alone, A and B exist simultaneously, and B exists alone. In addition, the character "/" in the present disclosure generally indicates that there is an "or" relationship between the association objects. It should also be understood that the "indication" mentioned in the embodiments of the present disclosure may be a direct indication, an indirect indication, or represent an associated relationship. For example, A indicates B, which may mean that A directly indicates B, for example, B may be acquired by A. It may also mean that A indicates B indirectly, for example, A indicates C, and B may be acquired through C. It may also represent that there is an association relationship between A and B. It should also be understood that the term "correspondence" mentioned in the embodiments of the present disclosure may represent that there is a direct correspondence or indirect correspondence between the two objects, may represent that there is an association relationship between the two objects, or may represent a relationship between indicating and being instructed, configuring and being configured, or the like. It should also be understood that the "predefined", "agreed by a protocol", "predetermined" and "predefined rule" mentioned in the embodiments of the present disclosure may be realized by storing corresponding codes, tables, or other methods that may be used to indicate relevant information in advance in devices (including, for example, the terminal device and the network device), and specific implementations are not limited in the present disclosure. For example, "predefined" may refer to "defined" in the protocol. It should also be understood that in the embodiments of the present disclosure, the term "protocol" may refer to a standard protocol in the field of communication, for example, which includes LTE protocol, NR protocol, and related protocols applied in future communication system, which is not limited in the present disclosure.

Satellites may be divided into two types according to the functions: transparent payload satellite and regenerative payload satellite. The transparent payload satellite only provides the functions of radio frequency filtering, frequency conversion and amplification, and only provides transparent transmission of signals, without changing the transmitted waveform signals. The regenerative payload satellite provides the functions of demodulation/decoding, routing/conversion, and encoding/modulation in addition to the functions of radio frequency filtering, frequency conversion and amplification, which has some or all functions of the base station.

In the NTN, one or more gateways may be included for communication between the satellite and the terminal.

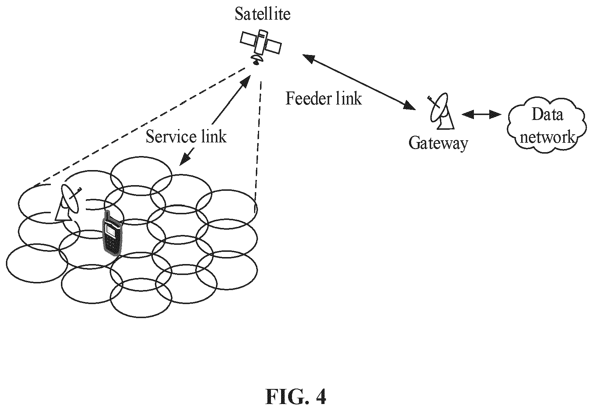

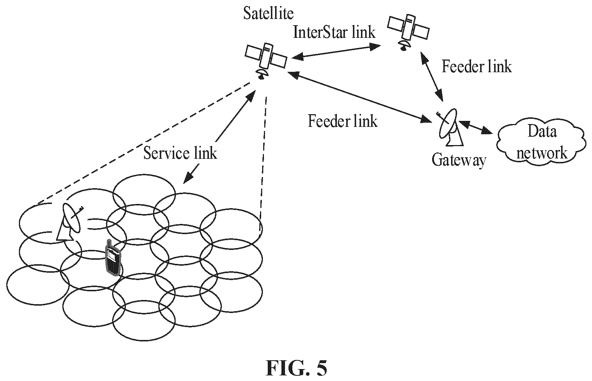

FIG. 4 is a schematic diagram of an NTN scenario based on a transparent payload satellite according to an embodiment of the present disclosure, and FIG. 5 is a schematic diagram of an NTN scenario based on a regenerative payload satellite according to an embodiment of the present disclosure.

As illustrated in FIG. 4, in the NTN scenario based on the transparent payload satellite, the gateway and the satellite communicate through a Feeder link, and the satellite and the terminal may communicate through a service link. As illustrated in FIG. 5, in the NTN scenario based on the regenerative payload satellite, the two satellites communicate through an InterStar link, the gateway and the satellite communicate through a Feeder link, and the satellite and the terminal communicate through a service link.

In FIG. 4 and FIG. 5, the gateway is used to connect the satellite and a terrestrial public network (for example, data network). The Feeder link is used for communication between the gateway and the satellite. The service link is used for communication between the terminal and the satellite. The InterStar link exists in the architecture of the regenerative payload network.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as optional solutions, and all of them belong to the scope of protection of the embodiments of the present disclosure.

An important feature of uplink transmission is orthogonal multiple access for different terminal devices in time-frequency domain, that is, uplink transmissions from different terminal devices in the same cell do not interfere with each other.

In order to ensure the orthogonality of uplink transmissions and avoid intra-cell interference, the network device requires that the arrival times of signals of different terminal devices that come at the same time and are transmitted through different frequency domain resources to the network device are basically aligned. In order to ensure time synchronization on the network device side, NR supports the mechanism of uplink time advance.

The uplink clock and the downlink clock on the network device side are the same, while there is an offset between the uplink clock and the downlink clock on the terminal device side, and different terminal devices have different uplink time advances. The network device may control the time at which uplink signals from different terminal devices reach the network device by appropriately controlling the offset of each terminal device. For the terminal device far away from the network device, due to the large transmission delay, it is necessary to transmit the uplink data earlier than the terminal device closer to the network device.

The network device determines a Timing Advance (TA) value for each terminal device by measuring the uplink transmission of the terminal device. The network device transmits a TA command to the terminal device by two manners.

1) Acquisition of initial TA: during the random access process, the network device determines the TA value by measuring the received preamble, and transmits the TA value to the terminal device through the Timing Advance Command field of the Random Access Response (RAR).

2) Adjustment of TA in the Radio Resource Control (RRC) connected state: although the terminal device obtains uplink synchronization with the network device during the random access process, the timing of the uplink signal arriving at the network device may change with time. Therefore, the terminal device needs to continuously update its uplink time advance to maintain uplink synchronization. If the TA of a certain terminal device needs to be corrected, the network device will transmit a Timing Advance Command to the terminal device to require the terminal device to adjust the uplink time. The Timing Advance Command is transmitted to the terminal device through a Media Access Control Control Element (MAC CE).

In a Carrier Aggregation (CA) scenario, the terminal device may need to use different TAs for different uplink carriers, so the concept of Timing Advance Group (TAG) is introduced into the standard. The network device configures at most four TAGs for each cell group of the terminal device, and configures the TAG to which it is associated for each serving cell. The terminal device maintains the TAs separately for each TAG. According to different TA values of the carriers, the carriers may be divided into different time advance groups, and the TA values of the carriers in each TAG are the same.

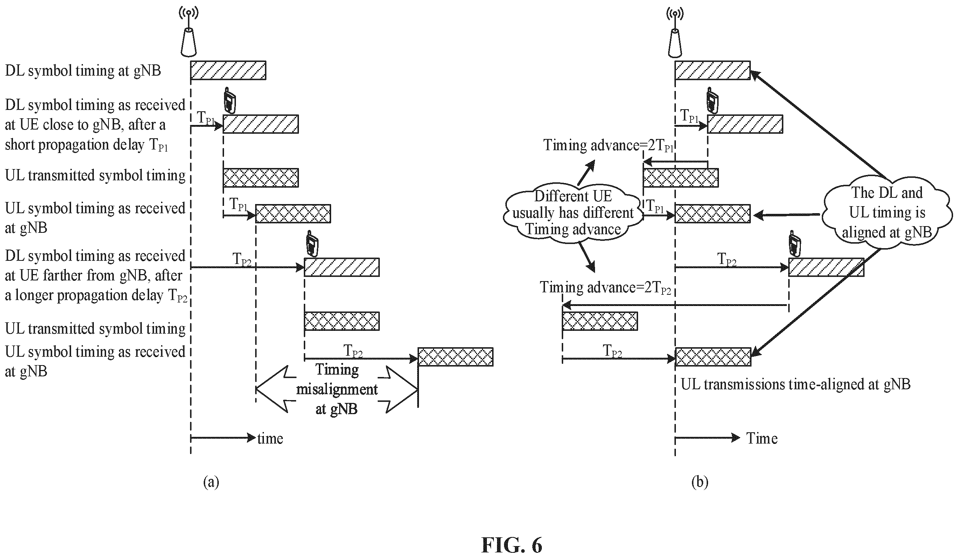

FIG. 6 is a schematic diagram of a method of time synchronization on the network device side. As illustrated in figure (a) of FIG. 6, the DownLink (DL) symbol timing as received at a terminal device (UE) close to the network device (gNB) undergoes a short propagation delay $T_{P1}$, so that the UpLink (UL) transmitted symbol timing is delayed $T_{P1}$ compared with the DL symbol timing of the network device (gNB). The UL symbol timing as received at the network device (gNB) is delayed by $T_{P1}$ compared to the UL transmitted symbol timing. The DL symbol timing as received at a terminal device (UE) farther from the network device (gNB) undergoes a longer propagation delay $T_{P2}$, so that the UL transmitted symbol timing is delayed by $T_{P2}$ compared with the DL symbol timing of the network device (gNB). The UL symbol timing as received at the network device (gNB) is delayed by $T_{P2}$ compared with the UL transmitted symbol timing. In this way, due to the timing misalignment at the network device (gNB), the network device will receive information transmitted by different terminal devices at different times.

As illustrated in figure (b) of FIG. 6, different terminal devices usually have different TAs. The TA set for the terminal device close to the network device is $2T_{P1}$, and the TA set for the terminal device farther from the network device is $2T_{P2}$. In this way, the DL and UL timing are aligned at the network device (gNB), so that the UL transmissions are aligned in time at the network device (gNB).

In the traditional Terrestrial Network (TN), the UE performs TA maintenance based on the TA command issued by the network. For the NTN, it is assumed that the UE has GNSS positioning capability and TA pre-compensation capability. The UE may estimate the service link TA by itself based on the UE position and the position of the serving satellite. Therefore, a combination of open-loop and closed-loop TA determination method is introduced in the NTN.

In some embodiments, for an NTN UE in an RRC_IDLE/INACTIVE state and an RRC_CONNECTED state, the time advance ($T_{TA}$) is determined according to a formula:

$$T_{TA} = \left(N_{TA} + N_{TA,UE-specific} + N_{TA,common} + N_{TA,offset}\right) \times T_c.$$

$N_{TA}$ is defined to be 0 for the scenario of Physical Random Access Channel (PRACH) transmission, and $N_{TA}$ may be subsequently updated by the TA command in Msg2/MsgB and the TA command MAC CE.

$N_{TA,UE-specific}$ is the service link TA estimated by the UE itself, which is used for TA pre-compensation. Specifically, the terminal obtains the position of the satellite based on the GNSS position information obtained by the terminal device itself and the satellite ephemeris information broadcast by the serving cell, thereby calculating the propagation delay of the service link between the UE and the satellite.

$N_{TA,common}$ is the common TA controlled by the network, and contains any timing bias deemed necessary by the network.

$N_{TA,offset}$ is a fixed offset for calculating the TA.

$T_c$ is the basic time unit.

In other embodiments, for an NTN UE in an RRC_IDLE state and an RRC_CONNECTED state, the time advance ($T_{TA}$) is determined according to a formula:

$$T_{TA} = \left(N_{TA} + N_{TA,offset} + N_{TA,adj}^{common} + N_{TA,adj}^{UE}\right)T_s.$$

$N_{TA}$ is defined to be 0 for the scenario of PRACH transmission, and $N_{TA}$ may be subsequently updated by the TA command in Msg2/MsgB and the TA command MAC CE.

$N_{TA,offset}$ is a fixed offset for calculating the TA. $N_{TA,adj}^{common}$ is the common TA controlled by the network, and contains any timing bias deemed necessary by the network. $N_{TA,adj}^{UE}$ is the service link TA estimated by the UE itself, which is used for TA pre-compensation. Specifically, the terminal obtains the position of the satellite based on the GNSS position information obtained by the terminal device itself and the satellite ephemeris information broadcast by the serving cell, thereby calculating the propagation delay of the service link between the UE and the satellite.

It may be seen from the above the calculation formula of $T_{TA}$ that when the UE in the RRC connected state obtains the service link TA (i.e., $N_{TA,UE-specific}$), on the one hand, GNSS position information of the UE is needed to be obtained, and on the other hand, the position of the serving satellite is needed to be obtained through the ephemeris information of the serving cell satellite. In addition, in order to calculate and obtain the TA of the UE, the UE also needs to obtain the common TA (i.e., $N_{TA,common}$ or $N_{TA,adj}^{common}$).

In the scenario of NB-IoT and eMTC access the NTN, the GNSS measurement module and communication module of the IoT terminal cannot operate simultaneously (Simultaneous GNSS and NTN NB-IoT/eMTC operation is not assumed). The IoT terminal can only perform GNSS measurement in the RRC IDLE or RRC INACTIVE to obtain position information, but cannot initiate the GNSS module in the RRC connected state. For this reason, the UE needs to obtain the GNSS position of itself through the measurement of the GNSS module before entering the RRC connected state. The UE may determine the validation duration of the GNSS position according to the situation of the UE (such as the UE mobile state), and report the remaining validation duration of the GNSS position to the network when the RRC connection is established/RRC is reestablished/the RRC connection is restored. For the UE in the RRC connected state, when the GNSS position of the UE expires, since the UE cannot perform GNSS operation in the RRC connected state, the UE cannot calculate the TA, and thus the UE needs to return to the RRC IDLE state.

In IoT NTN performance enhancement, Hybrid Automatic Repeat Request (HARQ) feedback is disabled to mitigate impact of HARQ stalling on UE data rates, and the improved GNSS operations are studied and specified, if needed, for UE pre-compensation during long connection times and for reduced power consumption.

Based on the above research objectives, the IoT terminal of the NTN will be able to perform GNSS operation in the RRC connected state.

An IoT NTN UE may need to re-obtain a valid GNSS position fix during RRC connection with a longer duration. How the UE updates the GNSS position fix or reduces the requirement to update the GNSS position fix during the RRC connected state is For Future Study (FFS).

For GNSS measurement in the connected state, at least the following candidates may be considered.

Method 1: A UE controlled by a timer re-obtains a GNSS position fix.
Method 2: A new gap is introduced, and the UE re-obtains the GNSS position fix during the gap.

For triggering of the GNSS measurement in the connected state, GNSS measurement triggered by the UE and/or GNSS measurement triggered by the network may be considered.

With the enhancement of capability of the IoT terminal, the UE may perform GNSS position fix operation in the RRC connected state. For the manner in which the base station triggers the GNSS measurement, the base station may need to know the GNSS time duration for measurement of the UE and/or the GNSS position validation duration of the UE, so that the base station decides how to configure an appropriate measurement gap for the UE to perform the GNSS measurement. The problem solved by the present disclosure is: when does the UE trigger/cancel the reporting of the GNSS assistance information, and the behavior of the UE when the UE triggers the reporting of the GNSS assistance information but the UE has no an uplink resource for transmitting the GNSS assistance information.

In order to facilitate understanding of the technical solutions of the embodiments of the present disclosure, the technical solutions of the present disclosure will be described in detail below with reference to specific examples. The above related technologies may be arbitrarily combined with the technical solutions of the embodiments of the present disclosures as optional solutions, and all of them belong to the scope of protection of the embodiments of the present disclosure. Embodiments of the present disclosure include at least some of the following.

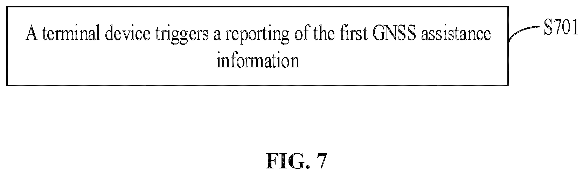

FIG. 7 is a flowchart of a communication method according to an embodiment of the present disclosure. As illustrated in FIG. 7, the method includes the following operation.

In operation S701, a terminal device triggers a reporting of the first GNSS assistance information.

Alternatively, the first GNSS assistance information may be replaced with current GNSS assistance information or most recently obtained GNSS assistance information.

Alternatively, the first GNSS assistance information and/or the second GNSS assistance information may be replaced with one of the following: the first position fix assistance information and/or the second position fix assistance information, the first GNSS related information and/or the second GNSS related information, the first GNSS related information for measurement and/or the second GNSS related information for measurement, the first GNSS time information for measurement and/or the second GNSS time information for measurement, the first GNSS time assistance information for measurement and/or the second GNSS time assistance information for measurement, the first GNSS assistance information for measurement and/or the second GNSS assistance information for measurement, and the like.

Alternatively, the first GNSS assistance information may include one piece of GNSS assistance information or multiple pieces of repeated GNSS assistance information.

Alternatively, the first GNSS assistance information may be determined according to the GNSS measurement after the terminal device completes the GNSS measurement each time. Alternatively, the first GNSS assistance information may not be obtained according to the GNSS measurement.

Alternatively, the first GNSS assistance information may be determined periodically or aperiodically by the terminal device. For example, the terminal device may determine the GNSS assistance information every preset time interval. For another example, the terminal device may determine a period for obtaining the GNSS assistance information according to a change in the position of the terminal device and/or a change in the network environment. Exemplarily, the terminal device does not obtain the GNSS assistance information in a case that the position of the terminal device is unchanged or the change amount of the positions of the terminal device is less than the first change amount. Exemplarily, the terminal device obtains the GNSS assistance information at a preset period in a case that the position of the terminal device changes or the change amount of the positions of the terminal device is greater than or equal to the first change amount. Exemplarily, the terminal device obtains the GNSS assistance information at a less period in a case that the position of the terminal device is unchanged or the change amount of the positions of the terminal device is less than the first change amount. Exemplarily, the terminal device obtains the GNSS assistance information at a greater period in a case that the position of the terminal device changes or the change amount of positions of the terminal device is greater than or equal to the first change amount. Alternatively, the change of positions of the terminal device may include the change of positions of the terminal device within a preset duration. Alternatively, the change amount of positions of the terminal device may include the change amount of positions of the terminal device within a preset duration. Exemplarily, the change amount of positions of the terminal device may be a change between the position at the end time point within the preset duration and the position at the initial time point within the preset duration.

Alternatively, the first GNSS assistance information may be determined by the terminal device according to at least one of the following: position information of the terminal device, change information of the positions of the terminal device, movement state of the terminal device, service type information of the terminal device, or network parameter information of the terminal device. Alternatively, the movement state of the terminal device may include at least one of the following: movement speed information of the terminal device, movement acceleration information of the terminal device, travel mode information of the terminal device, movement route information of the terminal device, movement destination information of the terminal device, or the like. Alternatively, the network parameter information of the terminal device may be determined based on a measurement result obtained by measuring the reference signal by the terminal device. For example, the reference signal may include at least one of the following: a Synchronization Signal Block (SSB) or a Channel State Information-Reference Signal (CSI-RS). Here, the SSB may also be referred to as a Synchronization Signal/Physical Broadcast Channel Block (SS/PBCH block). For example, the measurement result may include at least one of the following: a Reference Signal Received Power (RSRP), a Reference Signal Received Quality (RSRQ), a Received Signal Strength Indicator (RSSI), or a Signal to Interference and Noise Ratio (SINR).

Alternatively, the terminal device may trigger the reporting of the first GNSS assistance information in the RRC IDLE state, the RRC INACTIVE state, or the RRC ACTIVE state. Alternatively, the terminal device may trigger the reporting of the first GNSS assistance information before the random access, during the random access, or after the random access.

Alternatively, when the terminal device triggers the reporting of the first GNSS assistance information, the terminal device may report the first GNSS assistance information, or may cancel the reporting of the first GNSS assistance information. Alternatively, when the terminal device triggers the reporting of the first GNSS assistance information, the first GNSS assistance information may be in a pending state, and then the terminal device reports the first GNSS assistance information in the pending state or the terminal device cancels the reporting of the first GNSS assistance information.

Alternatively, when the terminal device triggers the reporting of the first GNSS assistance information, the terminal device may immediately report the first GNSS assistance information. Alternatively, when the terminal device triggers the reporting of the first GNSS assistance information, the terminal device may report the first GNSS assistance information after a target time interval. Alternatively, the time point at which the terminal device reports the first GNSS assistance information and the time point at which the terminal device triggers the reporting of the first GNSS assistance information may be in one time unit, in two adjacent time units respectively, or may be separated by one or more time units.

Alternatively, in any one embodiment of the present disclosure, the time unit may include at least one of the following: one or more frames, one or more subframes, one or more slots, and one or more symbols.

Alternatively, the first GNSS assistance information may be used for the network device to determine measurement configuration information of the GNSS measurement of the terminal device, so that the terminal device performs GNSS measurement based on the measurement configuration information of the GNSS measurement. For example, the measurement configuration information of the GNSS measurement may include at least one of the following: a measurement start time point of the GNSS measurement, a measurement end time point of the GNSS measurement, or a measurement duration.

Alternatively, the first GNSS assistance information may be used for the terminal device to determine at least one of the following: a time point at which the terminal device starts to perform GNSS measurement, a time point at which the terminal device stops performing GNSS measurement, a duration of GNSS measurement performed by the terminal device, or the like.

Alternatively, the network device may determine, based on the first GNSS assistance information, at least one of the following: a time point at which the terminal device starts to perform GNSS measurement, a time point at which the terminal device stops performing GNSS measurement, a duration of GNSS measurement performed by the terminal device, or the like, and then the network device may transmit a measurement command to the terminal device. The measurement command may carry at least one of the following: the measurement start time point, the measurement end time point, the measurement duration, or the like.

Alternatively, the terminal device may determine, based on the first GNSS assistance information, at least one of the following: a time point at which the terminal device starts to perform GNSS measurement, a time point at which the terminal device stops performing GNSS measurement, a duration of GNSS measurement performed by the terminal device, or the like. The network device may determine, based on the first GNSS assistance information, at least one of the following: a time point at which the terminal device starts to perform GNSS measurement, a time point at which the terminal device stops performing GNSS measurement, a duration of GNSS measurement performed by the terminal device, or the like.

Alternatively, the terminal device may determine at least one of the following included in the first GNSS assistance information, or the terminal device may determine at least one of the following corresponding to the first GNSS assistance information as at least one of a measurement start time point of the GNSS measurement, a measurement end time point of the GNSS measurement, and a measurement duration of the GNSS measurement: a measurement start time point, a measurement end time point, and a measurement duration.

Alternatively, in any one embodiment of the present disclosure, a time point may be understood as a moment or a time unit.

Alternatively, the terminal device may determine the position information of the terminal device according to the GNSS measurement.

In the embodiments of the present disclosure, the terminal device triggers the reporting of the first GNSS assistance information. In this way, the network device can instruct the terminal device to perform GNSS measurement at an appropriate time according to the first GNSS assistance information, thereby reducing the loss of data information caused by the fact that the terminal device is unable to receive the data information during the measurement when the network device transmits data information to the terminal device during the measurement, and further, the communication method provided by the present disclosure can improve the reliability of information transmission.

In some embodiments, the first GNSS assistance information includes at least one of the first GNSS position fix time duration for measurement or the first GNSS validation duration.

In some embodiments, the first GNSS assistance information may include at least one of the following: the first GNSS position fix time duration for measurement, the first GNSS validation duration, a remaining validation duration of the first GNSS, or the first GNSS position expiration time point. In any one embodiment of the present disclosure, the GNSS position expiration time point (including the first GNSS position expiration time point and/or the second GNSS position expiration time point) may be understood in the same manner as the GNSS expiration time point.

Alternatively, in any one embodiment of the present disclosure, the GNSS position fix time duration for measurement (including the first GNSS position fix time duration for measurement and/or the second GNSS position fix time duration for measurement) may include a time duration required for performing the GNSS measurement.

Alternatively, the first GNSS position fix time duration for measurement and/or the first GNSS validation duration may be determined according to at least one of the following: position information of the terminal device, change information of positions of the terminal device, movement state of the terminal device, service type information of the terminal device, or network parameter information of the terminal device.

Alternatively, when the change amount of positions of the terminal device is greater than the first change amount, and/or the movement speed of the terminal device is greater than the first speed, and/or the network parameter information of the terminal device represents that the network quality is worse than the preset quality, the GNSS position fix time duration for measurement is longer and/or the GNSS validation duration is shorter. Alternatively, when the change amount of positions of the terminal device is less than or equal to the first change amount, and/or the movement speed of the terminal device is less than or equal to the first speed, and/or the network parameter information of the terminal device represents that the network quality is equal to or better than the preset quality, the GNSS position fix time duration for measurement is shorter and/or the GNSS validation duration is longer.

Alternatively, the GNSS position fix time duration for measurement (including the first GNSS position fix time duration for measurement and/or the second GNSS position fix time duration for measurement) may include at least one of the following: a measurement start time point, a measurement end time point, and a measurement duration. Alternatively, the GNSS validation duration (including the first GNSS validation duration and/or the second GNSS validation duration) may include at least one of the following: a validation start time point, a validation end time point, and a validation duration. Alternatively, the validation end time point may be a GNSS position expiration time point corresponding to the GNSS validation duration.

Alternatively, in any one embodiment of the present disclosure, unless otherwise specified, the GNSS position fix time duration for measurement may include the first GNSS position fix time duration for measurement and/or the second GNSS position fix time duration for measurement. Alternatively, in any one embodiment of the present disclosure, unless otherwise specified, the GNSS validation duration may include the first GNSS validation duration and/or the second GNSS validation duration.

Alternatively, the remaining validation duration the first GNSS may include a duration from the current time to the GNSS position expiration time point. Alternatively, the remaining validation duration of the first GNSS may include one or more time units.

In some embodiments, the first GNSS assistance information is carried by a RRC signaling, and/or the first GNSS assistance information is carried by a MAC CE.

Alternatively, the first GNSS position fix time duration for measurement and the first GNSS validation duration may be carried by one RRC signaling, or the first GNSS position fix time duration for measurement and the first GNSS validation duration may be carried by two RRC signaling, respectively.

Alternatively, the first GNSS position fix time duration for measurement and the first GNSS validation duration may be carried by one MAC CE, or the first GNSS position fix time duration for measurement and the first GNSS validation duration may be carried by two MAC CEs, respectively. Alternatively, the two MAC CEs may be two MAC CEs in one MAC Protocol Data Unit (PDU), and the two MAC CEs may be adjacent or may not be adjacent. Alternatively, the two MAC CEs may be MAC CEs in two consecutive MAC PDUs or two nonconsecutive MAC PDUs, respectively, and the position of one MAC CE in the MAC PDU may correspond to the position of the other MAC CE in the MAC PDU or the position of one MAC CE in the MAC PDU may not correspond to the position of the other MAC CE in the MAC PDU.

In some embodiments, the operation that the terminal device triggers the reporting of the first GNSS assistance information includes the following operation.

The terminal device in a RRC connected state triggers the reporting of the first GNSS assistance information when a GNSS measurement is completed each time.

Alternatively, the time point at which the terminal device completes the GNSS measurement and the time point at which the terminal device triggers the reporting of the first GNSS assistance information may be in the same time unit, or may be in two adjacent time units, or may be in two time units separated by one or more time units.

Alternatively, the first GNSS position fix time duration for measurement and/or the first GNSS validation duration in the first GNSS assistance information may be determined at least based on the time corresponding to the GNSS measurement. For example, the first GNSS position fix time duration for measurement may be time corresponding to the GNSS measurement. For example, when the time corresponding to the GNSS measurement is longer, the first GNSS position fix time duration for measurement is longer, and/or when the time corresponding to the GNSS measurement is shorter, the first GNSS position fix time duration for measurement is shorter. For another example, when the time corresponding to the GNSS measurement is longer, the first GNSS validation duration is shorter, and/or when the time corresponding to the GNSS measurement is shorter, the first GNSS validation duration is longer.

Alternatively, when the terminal device completes the GNSS measurement each time in the RRC connected state, if the first GNSS position fix time duration for measurement of this time is different from the second GNSS position fix time duration for measurement corresponding to the GNSS measurement completed last time, the first GNSS assistance information that is triggered and reported by the terminal device includes the first GNSS position fix time duration for measurement, and/or if the first GNSS position fix time duration for measurement of this time is the same as the second GNSS position fix time duration for measurement corresponding to the GNSS measurement completed last time, the first GNSS assistance information that is triggered and reported by the terminal device may include the first GNSS position fix time duration for measurement or may not include the first GNSS position fix time duration for measurement.

Alternatively, when the first GNSS validation duration is the first GNSS validation time, in a case that the terminal device completes the GNSS measurement each time in the RRC connected state, if the first GNSS validation time of this time is different from the second GNSS validation time corresponding to the GNSS measurement completed last time, the first GNSS assistance information that is triggered and reported by the terminal device includes the first GNSS validation time, and/or if the current first GNSS validation time is the same as the second GNSS validation time corresponding to the most recently completed GNSS measurement, the first GNSS assistance information that is triggered and reported by the terminal device may include the first GNSS validation time or may not include the first GNSS validation time.

Alternatively, when the first GNSS validation duration is the first GNSS validation time, in a case that the terminal device completes the GNSS measurement each time in the RRC connected state, if the first GNSS position fix time duration for measurement of this time is different from the second GNSS position fix time duration for measurement corresponding to the GNSS measurement completed last time, and/or if the first GNSS validation time of this time is different from the second GNSS validation time corresponding to the GNSS measurement completed last time, the terminal device triggers the reporting of the first GNSS assistance information.

Alternatively, when the first GNSS validation duration is the first GNSS validation time, in a case that the terminal device completes the GNSS measurement each time in the RRC connected state, if the first GNSS position fix time duration for measurement of this time is the same as the second GNSS position fix time duration for measurement corresponding to the GNSS measurement completed last time, and/or if the first GNSS validation time of this time is the same as the second GNSS validation time corresponding to the GNSS measurement completed last time, the terminal device does not trigger the reporting of the first GNSS assistance information, or the terminal device triggers the reporting of the first GNSS assistance information.

Alternatively, when the terminal device completes the i-th time of GNSS measurement in the RRC connected state, the terminal device triggers the i-th time of reporting of the first GNSS assistance information. The first GNSS assistance information that is reported and triggered for i-th time is used for the terminal device to perform the (i+1)-th GNSS measurement in the RRC connected state. i is an integer greater than or equal to 1.

In some embodiments, the method further includes the following operation. The terminal device receives the first indication information. The first indication information instructs the terminal device to trigger the reporting of the first GNSS assistance information when the GNSS measurement is completed each time in the RRC connected state. In such an embodiment, in a case that the terminal device receives the first indication information, the terminal device triggers the reporting of the first GNSS assistance information when the GNSS measurement is completed each time, and/or the terminal device triggers the reporting of the first GNSS assistance information when the GNSS measurement is completed each time according to the received content of the first indication information.

Alternatively, the content of the first indication information may include indication information indicating reporting the first GNSS assistance information, or indication information indicating not report the first GNSS assistance information. In this way, in a case that the content of the first indication information indicates reporting the first GNSS assistance information, the terminal device triggers the reporting of the first GNSS assistance information when the GNSS measurement is completed each time according to the content of the first indication information. Alternatively, in a case that the content of the first indication information indicates not report the first GNSS assistance information, the terminal device does not trigger the reporting of the first GNSS assistance information when the GNSS measurement is completed each time according to the content of the first indication information.

Alternatively, the first indication information may further include indication information indicating reporting the first GNSS assistance information and a corresponding first duration, or indication information indicating not report the first GNSS assistance information and a corresponding second duration. In this way, in a case that the content of the first indication information indicates reporting the first GNSS assistance information and the corresponding first duration, the terminal device triggers the reporting of the first GNSS assistance information when the GNSS measurement is completed each time within the first duration. Alternatively, when the content of the first indication information indicates not report the first GNSS assistance information and the corresponding second duration, the terminal device does not trigger the reporting of the first GNSS assistance information when the GNSS measurement is completed each time within the second duration.

In other embodiments, the terminal device receives first indication information. The first indication information instructs the terminal device to trigger the reporting of the first GNSS assistance information when the current GNSS measurement is completed in the RRC connected state. In such an embodiment, when the terminal device receives the first indication information for the j-th time and completes the GNSS measurement, the terminal device triggers the reporting of the first GNSS assistance information, and when the terminal device receives the first indication information for the (j+1)-th time and completes the GNSS measurement, the terminal device triggers the reporting of the first GNSS assistance information. j is an integer greater than or equal to 1. In this way, the terminal device may trigger the reporting of the first GNSS assistance information when a GNSS measurement is completed according to the received content of the first indication information.

Alternatively, the content of the first indication information may include indication information indicating reporting the first GNSS assistance information, or indication information indicating not reporting the first GNSS assistance information. In this way, the terminal device triggers the reporting of the first GNSS assistance information when a GNSS measurement is completed according to the content of the first indication information, in a case that the first indication information indicates reporting the first GNSS assistance information. Alternatively, the terminal device does not trigger the reporting of the first GNSS assistance information when a GNSS measurement is completed according to the content of the first indication information, in a case that the first indication information indicates not reporting the first GNSS assistance information,.

Alternatively, the first indication information may be carried in broadcast signaling or terminal device (UE) dedicated signaling.

Alternatively, the first indication information may be carried in the GNSS measurement command or the first indication information may not be carried in the GNSS measurement command.

In some embodiments, the operation that the terminal device triggers the reporting of the first GNSS assistance information when the GNSS measurement is completed each time in the RRC connected state includes the following operation.

The terminal device triggers the reporting of the GNSS assistance information when the GNSS measurement is completed each time in the RRC connected state and a downlink synchronization and/or an uplink synchronization is obtained.

Alternatively, the terminal device may obtain the downlink synchronization and/or the uplink synchronization after the GNSS measurement is completed each time in the RRC connected state or before the GNSS measurement is completed each time in the RRC connected state. Alternatively, the time point at which the terminal device complete the GNSS measurement each time in the RRC connected state and the time point at which the downlink synchronization and/or the uplink synchronization is obtained may be in one time unit, or in two adjacent time units, respectively, or in two time units separated by at least one time unit, respectively.

Alternatively, in some embodiments, the terminal device may trigger the reporting of the first GNSS assistance information at the time point at which the GNSS measurement is completed each time in the RRC connected state or after the time point at which the GNSS measurement is completed each time in the RRC connected state, and then the terminal device reports the first GNSS assistance information.

Alternatively, in another embodiment, the terminal device may trigger the reporting of the first GNSS assistance information before the GNSS measurement is completed each time in the RRC connected state, and the terminal device reports the first GNSS assistance information after the GNSS measurement is completed each time in the RRC connected state.

Alternatively, in some embodiments, the terminal device may trigger the reporting of the first GNSS assistance information at the time point when the terminal device is in the downlink synchronization and/or the uplink synchronization with the target cell or after the time point when the terminal device is in the downlink synchronization and/or the uplink synchronization with the target cell, and then the terminal device reports the first GNSS assistance information.

Alternatively, in another embodiment, the terminal device may trigger the reporting of the first GNSS assistance information before the terminal device is in the downlink synchronization and/or uplink synchronization with the target cell, and the terminal device reports the first GNSS assistance information after the terminal device is in the downlink synchronization and/or uplink synchronization with the target cell.

In some embodiments, the operation that the terminal device triggers the reporting of the first GNSS assistance information includes the following operation.

When the first GNSS assistance information is different from the second GNSS assistance information most recently reported by the terminal device and/or a change amount between the first GNSS assistance information and the second GNSS assistance information most recently reported by the terminal device exceeds or reaches the first threshold, the terminal device triggers the reporting of the first GNSS assistance information.

Alternatively, the second GNSS assistance information most recently reported by the terminal device may include the second GNSS assistance information most recently reported by the terminal device to a currently serving network device (for example, a base station) in the current RRC connection process.

In any one embodiment of the present disclosure, the second GNSS assistance information may include at least one of the following: the second GNSS position fix time duration for measurement, the second GNSS validation duration, a remaining validation duration of the second GNSS, or the second GNSS location expiration time point. Alternatively, the second GNSS assistance information may be understood with reference to the first GNSS assistance information, and the second GNSS assistance information may have technical features corresponding to the first GNSS assistance information.

Alternatively, the difference between the first GNSS assistance information and the second GNSS assistance information may include that the difference between the first GNSS position fix time duration for measurement and the second GNSS position fix time duration for measurement, and/or the difference between the GNSS expiration time point corresponding to the first GNSS validation duration and the GNSS expiration time point corresponding to the second GNSS validation duration.

Alternatively, the first threshold may include the second threshold and/or the third threshold. The change amount between the first GNSS assistance information and the second GNSS assistance information exceeding or reaching the first threshold may include the change amount between the first GNSS position fix time duration for measurement and the second GNSS position fix time duration for measurement exceeding or reaching the second threshold, and/or the change amount between the GNSS expiration time point corresponding to the first GNSS validation and the GNSS expiration time point corresponding to the second GNSS validation exceeding or reaching the third threshold.

Alternatively, at least one of the first threshold, the second threshold, and the third threshold may be transmitted by the currently serving network device to the terminal device, or at least one of the first threshold, the second threshold, and the third threshold may be agreed in a protocol, or at least one of the first threshold, the second threshold, and the third threshold may be determined by the terminal device according to pre-configuration.

Alternatively, at least one of the first threshold, the second threshold, and the third threshold may be transmitted by broadcast signaling, or may be transmitted by terminal device dedicated information.

Alternatively, at least one of the first threshold, the second threshold, and the third threshold may be determined according to at least one of the following: position information of the terminal device, change information of positions of the terminal device, movement state of the terminal device, service type information of the terminal device, network parameter information of the terminal device, or remaining power information of the terminal device. Exemplarily, when the position of the terminal device is changed quickly, at least one of the first threshold, the second threshold, and the third threshold may be greater, and/or when the position of the terminal device is changed slowly, at least one of the first threshold, the second threshold, and the third threshold may be less.

In some embodiments, the method further includes the following operation. The terminal device receives the second indication information. The second indication information indicates a trigger condition for the reporting of the first GNSS assistance information. The trigger condition includes that the first GNSS assistance information is different from the second GNSS assistance information most recently reported by the terminal device and/or a change amount between the first GNSS assistance information and the second GNSS assistance information most recently reported by the terminal device exceeds or reaches the first threshold.

Alternatively, the second indication information may be carried in broadcast signaling or terminal device (UE) dedicated signaling.

Alternatively, the second indication information may include one or more bits. The trigger condition for the reporting of the first GNSS assistance information is indicated by the one or more bits. Alternatively, the second indication information may include a target domain or a target field. The target domain or the target field is used for configuring the trigger condition.

Alternatively, the second indication information may be carried in the GNSS measurement command, or the second indication information may not be carried in the GNSS measurement command.

In some embodiments, the first GNSS assistance information includes: the first GNSS position fix time duration for measurement and the first GNSS validation duration, the second GNSS assistance information includes: the second GNSS position fix time duration for measurement and the second GNSS validation duration. The first threshold includes the second threshold and/or the third threshold.

Alternatively, the operation that when the first GNSS assistance information is different from the second GNSS assistance information most recently reported by the terminal device and/or the change amount between the first GNSS assistance information and the second GNSS assistance information most recently reported by the terminal device exceeds or reaches the first threshold, the terminal device triggers the reporting of the first GNSS assistance information includes the following operation.

When the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold, the terminal device triggers a reporting of the first GNSS position fix time duration for measurement, or the terminal device triggers the reporting of the first GNSS assistance information.

Alternatively, the operation that when the first GNSS assistance information is different from the second GNSS assistance information most recently reported by the terminal device and/or the change amount between the first GNSS assistance information and the second GNSS assistance information most recently reported by the terminal device exceeds or reaches the first threshold, the terminal device triggers the reporting of the first GNSS assistance information includes the following operation.

When a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold, the terminal device triggers a reporting of the first GNSS validation duration, or the terminal device triggers the reporting of the first GNSS assistance information.

Alternatively, the first GNSS position fix time duration for measurement being different from the second GNSS position fix time duration for measurement and/or the change amount between the first GNSS position fix time duration for measurement and the second GNSS position fix time duration for measurement exceeding or reaching the first threshold may include: a measurement start time point corresponding to the first GNSS position fix time duration for measurement being different from a measurement start time point corresponding to the second GNSS position fix time duration for measurement and/or the change amount between the measurement start time point corresponding to the first GNSS position fix time duration for measurement and the measurement start time point corresponding to the second GNSS position fix time duration for measurement exceeding or reaching the first threshold, and/or a measurement end time point corresponding to the first GNSS position fix time duration for measurement being different from a measurement end time point corresponding to the second GNSS position fix time duration for measurement and/or the change amount between the measurement end time point corresponding to the first GNSS position fix time duration for measurement and the measurement end time point corresponding to the second GNSS position fix time duration for measurement exceeding or reaching the first threshold, and/or a measurement duration corresponding to the first GNSS position fix time duration for measurement being different from a measurement duration corresponding to the second GNSS position fix time duration for measurement and/or the change amount between the measurement duration corresponding to the first GNSS position fix time duration for measurement and the measurement duration corresponding to the second GNSS position fix time duration for measurement exceeding or reaching the first threshold.

In some embodiments, the first threshold is transmitted by the network device to the terminal device, or the first threshold is determined by the terminal device according to a pre-configuration, or the first threshold is agreed by a protocol.

In some embodiments, the operation that the terminal device triggers the reporting of the first GNSS assistance information includes: the terminal device triggers the reporting of the first GNSS assistance information during a handover process.

Alternatively, the terminal device may automatically trigger the reporting of the first GNSS assistance information before the handover process or during the handover process, or the terminal device may trigger the reporting of the first GNSS assistance information before the handover process or during the handover process according to information transmitted by the source network device or the target network device. For example, the reporting of the first GNSS assistance information is triggered according to the third indication information transmitted by the source network device or the target network device.

Alternatively, the terminal device may trigger the reporting of the first GNSS assistance information during the handover process, and transmit the first GNSS assistance information to the target network device when the handover process is completed.

In some embodiments, the method further includes the following operation.

The terminal device receives the third indication information before the handover process or during the handover process. The third indication information instructs the terminal device to trigger the reporting of the first GNSS assistance information.

Alternatively, the third indication information may be transmitted by the source network device to the terminal device. For example, the third instruction information may be carried in the handover command.

Alternatively, the third indication information may be transmitted by the target network device to the terminal device. For example, the third indication information may be carried in a broadcast message of the target cell, or the third indication information may be carried in terminal device dedicated signaling transmitted by the target network device to the terminal device.

Alternatively, the third indication information may be carried in the GNSS measurement command or the third indication information may not be carried in the GNSS measurement command.

In some embodiments, the operation of triggering the reporting of the first GNSS assistance information includes the following operation.

The terminal device triggers the reporting of the first GNSS assistance information when the terminal device is in a downlink synchronization and/or an uplink synchronization with a target cell.

Alternatively, in some embodiments, the terminal device may trigger the reporting of the first GNSS assistance information at the time point at which the terminal device is in the downlink synchronization and/or uplink synchronization with the target cell or after the time point at which the terminal device is in the downlink synchronization and/or uplink synchronization with the target cell, and then the terminal device reports the first GNSS assistance information.

Alternatively, in another embodiment, the terminal device may trigger the reporting of the first GNSS assistance information before the terminal device is in the downlink synchronization and/or uplink synchronization with the target cell, and the terminal device reports the first GNSS assistance information after the terminal device is in the downlink synchronization and/or uplink synchronization with the target cell.

In some embodiments, the method further includes that: the terminal device cancels the triggered reporting of the first GNSS assistance information. In other embodiments, the method further includes that: the terminal device does not report the first GNSS assistance information. In other embodiments, the method further includes that: the terminal device discards the first GNSS assistance information.

In some embodiments, the operation that the terminal device cancels the triggered reporting of the first GNSS assistance information includes the following operation.

The terminal device cancels the triggered reporting of the first GNSS assistance information when at least one of the following conditions is satisfied.

The terminal device receives a GNSS measurement command.

A GNSS valid timer of the terminal device expires.

The terminal device initiates a GNSS measurement.

The terminal device is out of an uplink synchronization.

The terminal device triggers a MAC reset.

The terminal device transmits a MAC PDU, and the MAC PDU includes a GNSS assistance information MAC CE.

Alternatively, the terminal device may receive a GNSS measurement command transmitted by the current serving network device.

Alternatively, the GNSS measurement command may be transmitted by broadcast signaling, or may be transmitted by terminal device dedicated signaling.

Alternatively, the GNSS measurement command may include one or more bits. The one or more bits are used for indicating a GNSS measurement. Alternatively, the GNSS measurement command may include a target domain or a target field. The target domain or the target field is used for configuring measurement configuration information of the GNSS measurement.

Alternatively, the GNSS measurement command may include measurement configuration information. The measurement configuration information may include at least one of the following: a measurement start time point, a measurement end time point, or a measurement duration.

Alternatively, the GNSS measurement command may be a separate command, or the GNSS measurement command may be carried in the RRC signaling, or the GNSS measurement command may be carried in the MAC CE.

Alternatively, the start time point of the GNSS valid timer may be a time point at which the terminal device completed the most recent time of GNSS measurement and/or a time point at which the terminal device is in the downlink synchronization and/or uplink synchronization, or a time point at which the terminal device receives configuration information of the GNSS valid timer from the network device. Alternatively, the duration of the GNSS valid timer may be transmitted by the network device to the terminal device, or may be agreed in a protocol, or may be determined by the terminal device according to a pre-configuration.

Alternatively, when the terminal device triggers the reporting of the first GNSS assistance information, if the terminal device transmits a MAC PDU and the MAC PDU includes one or more GNSS assistance information MAC CE, the terminal device cancels the triggered reporting of the first GNSS assistance information.

In some embodiments, when the terminal device has triggered the reporting of the first GNSS assistance information, if the terminal device does not have an available resource/uplink resource for transmitting the first GNSS assistance information, or if the terminal device has an available resource/uplink resource for transmitting the first GNSS assistance information, but the available resource/uplink resource for transmitting the first GNSS assistance information is not able to accommodate the first GNSS assistance information/first GNSS assistance information MAC CE, then the terminal device may request an uplink resource by triggering a Scheduling Request (SR) to transmit the first GNSS assistance information, and/or the terminal device may request the uplink resource by triggering random access to transmit the first GNSS assistance information, and/or the terminal device may cancel the triggered reporting of the first GNSS assistance information.

In some embodiments, the method further includes the following operation. When at least one of the following conditions is satisfied, the terminal device triggers a SR, and/or triggers a random access.

The terminal device has triggered the reporting of the first GNSS assistance information, and the terminal device does not have a PUSCH resource available for transmitting the first GNSS assistance information currently.

The terminal device has triggered the reporting of the first GNSS assistance information, and the terminal device has a PUSCH resource available for transmitting the first GNSS assistance information currently, and it is determined based on a Logical Channel Prioritization (LCP) result that the PUSCH resource is not able to accommodate the first GNSS assistance information or the PUSCH resource is not able to accommodate the first GNSS assistance information MAC CE.

A time interval from a time point, at which the terminal device triggers the reporting of the first GNSS assistance information to a current time point, is greater than or equal to the fourth threshold.

Alternatively, the time interval from the time point, at which the terminal device triggers the reporting of the first GNSS assistance information to the current time point, is greater than or equal to the fourth threshold, which may be replaced by: the target timer of the terminal device expires, and the timing duration of the target timer may be the fourth threshold. Alternatively, the target timer may be the above GNSS valid timer, or the target timer may be a timer different from the above GNSS valid timer. Alternatively, the timing duration of the target timer may be the same as or different from the timing duration of the above GNSS valid timer.

Alternatively, the fourth threshold may be transmitted by the network device to the terminal device, or may be agreed in a protocol, or may be determined by the terminal device according to a pre-configuration. For example, the network device configures the fourth threshold by broadcast signaling or UE dedicated signaling.

Alternatively, the priority of the first GNSS assistance information may be higher or lower than the priority of the service data. Alternatively, the priority of the first GNSS assistance information is higher or lower than the priority of retransmission data. Alternatively, the priority of the first GNSS assistance information is higher than or lower than the priority of the initially transmitted data. Exemplarily, the priority of the first GNSS assistance information may be lower than the priority of the service data. Exemplarily, the priority of the first GNSS assistance information is lower than the priority of retransmission data. Exemplarily, the priority of the first GNSS assistance information is lower than the priority of the initially transmitted data.

In some embodiments, the method further includes the following operation. The terminal device cancels the SR that has been triggered and is in a pending state when one of the following conditions is satisfied.

The terminal device completes the reporting of the first GNSS assistance information.

The terminal device cancels the reporting of the first GNSS assistance information.

The terminal device cancels reporting of all of GNSS assistance information.

Alternatively, the operation that the terminal device cancels the reporting of the first GNSS assistance information may include the following operation. The terminal device cancels the first GNSS assistance information, or the terminal device does not report the first GNSS assistance information.

Alternatively, the operation that the terminal device cancels reporting of all of GNSS assistance information may include the following operation. The terminal device cancels all GNSS assistance information, or the terminal device does not report all of GNSS assistance information.

Alternatively, all of the GNSS assistance information may include the first GNSS assistance information. Alternatively, all of GNSS assistance information may include all of GNSS assistance information that is in the pending state currently. Alternatively, all of the GNSS assistance information may include GNSS assistance information that is not transmitted currently and/or GNSS assistance information that is generated after the current time.

Alternatively, when the terminal device cancels reporting of all of GNSS assistance information, the terminal device may no longer trigger the reporting of GNSS assistance information.

Alternatively, it is triggered by the terminal device itself that the terminal device cancels the reporting of the first GNSS assistance information, or the serving network device instructs the terminal device to cancel the reporting of the first GNSS assistance information. Alternatively, it is triggered by the terminal device itself that the terminal device cancels reporting of all of GNSS assistance information, or the serving network device instructs the terminal device to cancel reporting of all of GNSS assistance information.

In some embodiments, after the terminal device triggers the SR, the method further includes the following operation.

The terminal device triggers a random access when at least one of the following conditions is satisfied.

The terminal device has no PUCCH resource or PUSCH resource available for transmitting the SR.

The number of transmissions corresponding to the SR reaches a maximum number of transmissions.

In some embodiments, the method further includes the following operation. The terminal device stops or cancels the random access that has been triggered or is ongoing when one of following conditions is satisfied.

The terminal device receives an uplink grant, and the terminal device transmits the first GNSS assistance information by using the uplink grant.

The terminal device receives a GNSS measurement command.

The terminal device initiates a GNSS measurement.

Alternatively, in a case that the terminal device stops or cancels the random access that has been triggered or is ongoing, the terminal device will continue to use cell communication used before random access.

Alternatively, after the terminal device transmits the first GNSS assistance information by using the uplink grant, the terminal device stops or cancels the random access that has been triggered or is ongoing. Alternatively, after the terminal device receives the uplink grant and before the terminal device transmits the first GNSS assistance information by using the uplink grant, the terminal device stops or cancels the random access that has been triggered or is ongoing.

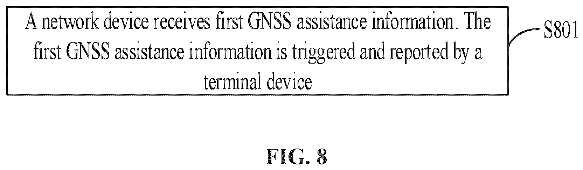

FIG. 8 is a flowchart of another communication method according to an embodiment of the present disclosure. As illustrated in FIG. 8, the method includes the following operation.

In operation S801, a network device receives first GNSS assistance information. The first GNSS assistance information is triggered and reported by a terminal device.

Alternatively, the first GNSS assistance information may be transmitted through a PUSCH resource for transmitting the first GNSS assistance information.

Alternatively, the network device may receive the first GNSS assistance information during the random access process. Alternatively, the terminal device may receive the first GNSS assistance information when the terminal device is in the connected state.

In some embodiments, the first GNSS assistance information includes at least one of the first GNSS position fix time duration for measurement and the first GNSS validation duration.

In some embodiments, the first GNSS assistance information is carried by RRC signaling, and/or the first GNSS assistance information is carried by a MAC CE.

In some embodiments, the first GNSS assistance information is triggered and reported by the terminal device when a GNSS measurement is completed each time in a RRC connected state.

In some embodiments, the method further includes the following operation.

The network device transmits the first indication information. The first indication information instructs the terminal device to trigger the reporting of the first GNSS assistance information when the GNSS measurement is completed each time in the RRC connected state, or the first indication information instructs the terminal device to trigger the reporting of the first GNSS assistance information when a current GNSS measurement is completed in the RRC connected state.

In some embodiments, the first GNSS assistance information is triggered and reported by the terminal device when the GNSS measurement is completed each time in the RRC connected state and a downlink synchronization and/or an uplink synchronization is obtained.

In some embodiments, the first GNSS assistance information is triggered and reported by the terminal device when the first GNSS assistance information is different from the second GNSS assistance information most recently reported by the terminal device and/or a change amount between the first GNSS assistance information and the second GNSS assistance information most recently reported by the terminal device exceeds or reaches the first threshold.

Alternatively, the second GNSS assistance information most recently reported by the terminal device may include the second GNSS assistance information most recently reported by the terminal device to the current serving network device during the current RRC connection process.

In some embodiments, the method further includes the following operation.

The network device transmits the second indication information. The second indication information indicates a trigger condition for the reporting of the first GNSS assistance information. The trigger condition includes that the first GNSS assistance information is different from the second GNSS assistance information most recently reported by the terminal device and/or a change amount between the first GNSS assistance information and the second GNSS assistance information most recently reported by the terminal device exceeds or reaches the first threshold.

In some embodiments, the first GNSS assistance information includes the first GNSS position fix time duration for measurement and the first GNSS validation duration. The second GNSS assistance information includes the second GNSS position fix time duration for measurement and the second GNSS validation duration. The first threshold includes the second threshold and/or the third threshold.

The first GNSS position fix time duration for measurement or the first GNSS assistance information is triggered and reported by the terminal device when the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold, and/or the first GNSS validation duration or the first GNSS assistance information is triggered and reported by the terminal device when a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold.

In some embodiments, the method further includes the following operation. The network device transmits the first threshold.

In some embodiments, the first GNSS assistance information is triggered and reported by the terminal device during a handover process.

In some embodiments, the method further includes the following operation. The network device transmits the third indication information before the handover process or during the handover process. The third indication information instructs the terminal device to trigger the reporting of the first GNSS assistance information.

In some embodiments, the first GNSS assistance information is triggered and reported by the terminal device when the terminal device is in a downlink synchronization and/or an uplink synchronization with a target cell.

In some embodiments, the method further includes the following operation. The network device transmits a GNSS measurement command.

In some embodiments, the method further includes the following operations. The network device receives a SR. The network device allocates the first uplink resource. The operation that the network device receives the first GNSS assistance information includes the following operation. The network device receives the first GNSS assistance information transmitted through the first uplink resource.

In some embodiments, the method further includes the following operation. The network device allocates the second uplink resource. The operation that the network device receives the first GNSS assistance information includes the following operation. The network device receives the first GNSS assistance information transmitted through the second uplink resource.

Alternatively, the operation that the network device allocates the second uplink resource may include the following operation. The network device allocates the second uplink resource through a broadcast signaling, or the network device allocates the second uplink resource through a terminal device dedicated signaling.

Alternatively, the operation that the network device allocates the second uplink resource may include the following operation. The network device allocates the second uplink resource through random access.

Alternatively, the first uplink resource may be replaced with the first uplink grant. Alternatively, the second uplink resource may be replaced with the second uplink grant.

In any one embodiment of the present disclosure, the terminal device and the UE may be understood in the same way.

In some embodiments of the present disclosure, a trigger for the reporting of GNSS assistance information is proposed.

After the UE in the RRC connected state completes the GNSS measurement each time, or when the current GNSS assistance information of the UE changes compared with the most recently reported GNSS assistance information, or when the change amount between the current GNSS assistance information of the UE and the most recently reported GNSS assistance information exceeds a certain threshold, or during the handover process, the UE triggers the reporting of the GNSS assistance information.

In some embodiments, it is triggered by the network device or by the UE itself that the UE in the RRC connected state performs GNSS measurement, and the UE triggers the reporting of GNSS assistance information when the GNSS measurement is completed each time.

Alternatively, the GNSS assistance information includes a GNSS position fix time duration for measurement and/or a GNSS validation duration.

Alternatively, the GNSS position fix time duration for measurement and the GNSS validation duration may be carried by a RRC signaling or a MAC CE. If the GNSS position fix time duration for measurement and the GNSS validation duration are both carried by the MAC CE, the GNSS position fix time duration for measurement and the GNSS validation duration may be carried by one MAC CE or different MAC CEs.

Alternatively, the reporting of the GNSS assistance information may be based on a network configuration. The network indicates whether the UE reports the GNSS assistance information after completing the GNSS measurement by broadcast or UE dedicated signaling.

Alternatively, after the UE completes the GNSS measurement and obtains the downlink synchronization and/or the uplink synchronization, the UE triggers the reporting of the GNSS assistance information.

In some embodiments, after the UE completes at least one time of reporting of the GNSS assistance information, the UE triggers the reporting of the GNSS assistance information if the current GNSS assistance information of the UE changes compared with the most recently reported GNSS assistance information or the change amount between the current GNSS assistance information of the UE and the most recently reported GNSS assistance information exceeds a certain threshold.

Alternatively, if the GNSS expiration time point corresponding to the GNSS validation duration currently evaluated/determined by the UE changes compared with the GNSS expiration time point corresponding to the GNSS validation duration most recently reported by the UE, or the change amount between the GNSS expiration time point corresponding to the GNSS validation duration currently evaluated/determined by the UE and the GNSS expiration time point corresponding to the GNSS validation duration most recently reported by the UE exceeds or reaches the first threshold, the UE triggers the reporting of the GNSS validation duration. The first threshold is configured by the network to the UE through broadcast or RRC dedicated signaling.

Alternatively, the UE carries the GNSS position fix time duration for measurement while reporting the GNSS validation duration.

Alternatively, if the GNSS position fix time duration for measurement currently evaluated/determined by the UE changes compared with the GNSS position fix time duration for measurement most recently reported by the UE, or the change amount between the GNSS position fix time duration for measurement currently evaluated/determined by the UE and the GNSS position fix time duration for measurement most recently reported by the UE exceeds or reaches the second threshold, the UE triggers the reporting of the GNSS time duration for measurement. The second threshold is configured by the network to the UE through broadcast or RRC dedicated signaling.

Alternatively, the UE carries a GNSS validation duration while reporting the GNSS position fix time duration for measurement.

In some embodiments, the UE triggers the reporting of GNSS assistance information to the target cell during the handover process.

Alternatively, the UE determines whether to trigger the reporting of the GNSS assistance information to the target cell based on a network indication. The network indication may be carried in UE dedicated signaling (such as a handover command) or in a broadcast message of the target cell.

Alternatively, the UE triggers the reporting of the GNSS assistance information after obtaining the downlink synchronization and/or the uplink synchronization with the target cell.

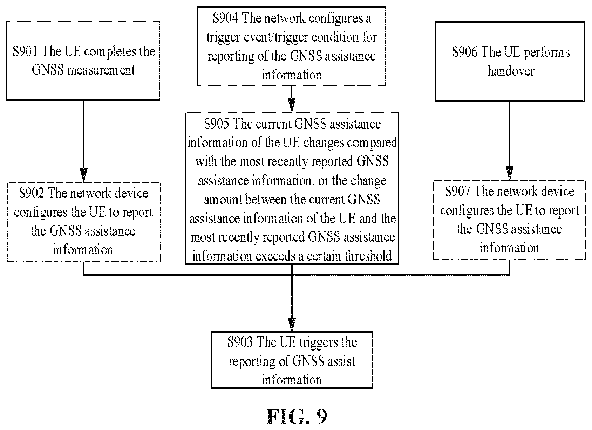

FIG. 9 is a flowchart of another communication method according to the embodiment of the present disclosure. As illustrated in FIG. 9, the method includes operation S901, operation S902, and operation S903, and/or the method includes operation S904, operation S905, and operation S903, and/or the method includes operation S906, operation S907, and operation S903.

In the operation S901, the UE completes the GNSS measurement.

In the operation S902, the network device configures the UE to report the GNSS assistance information.

Alternatively, the operation S901 may be performed before the operation S902, or the operation S901 may be performed after the operation S902.

In the operation S903, the UE triggers the reporting of GNSS assist information.

In the operation S904, the network configures a trigger event/trigger condition for reporting of the GNSS assistance information.

In the operation S905, the current GNSS assistance information of the UE changes compared with the most recently reported GNSS assistance information, or the change amount between the current GNSS assistance information of the UE and the most recently reported GNSS assistance information exceeds a certain threshold.

Alternatively, the operation S904 may be performed before the operation S905, or the operation S904 may be performed after the operation S905.

In the operation S906, the UE performs handover.

In the operation S907, the network device configures the UE to report the GNSS assistance information.

For the operation S907, the network device may be a source network device or a target network device.

Alternatively, the operation S906 may be performed before the operation S907, or the operation S906 may be performed after the operation S907.

In some embodiments of the present disclosure, cancellation of the reporting of GNSS assistance information is proposed.

In some embodiments, when the UE in the RRC connected state receives a GNSS measurement command or initiates GNSS measurement, or when a GNSS valid timer expires or the terminal device is out of an uplink synchronization or the terminal device triggers a MAC reset, the UE cancels reporting of (all) GNSS assistance information that has been triggered.

Alternatively, after the UE in the RRC connected state triggers the reporting of the GNSS assistance information, the UE cancels the reporting of (all) GNSS assistance information that has been cancelled in at least one of the following situations.

The UE receives a GNSS measurement command from the base station.

The GNSS valid timer of the UE expires.

The UE initiates a GNSS measurement (it may be triggered by the base station or UE itself).

The UE is out of uplink synchronization.

The UE triggers the MAC reset.

Alternatively, the cancelled GNSS assistance information includes a GNSS position fix time duration for measurement and/or a GNSS validation duration.

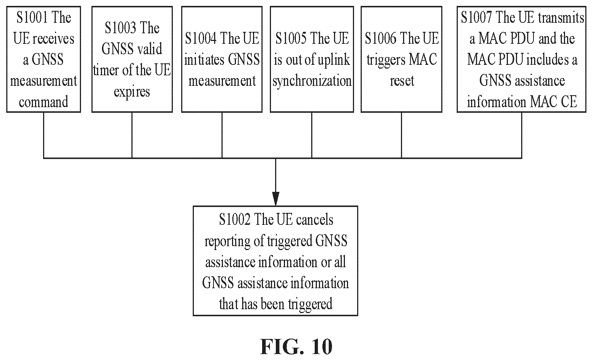

FIG. 10 is a flowchart of another communication method according to an embodiment of the present disclosure. As illustrated in FIG. 10, the method includes operation S1001 and operation S1002, and/or the method includes operation S1003 and operation S1002, and/or the method includes operation S1004 and operation S1002, and/or the method includes operation S1005 and operation S1002, and/or the method includes operation S1006 and operation S1002, and/or the method includes operation S1007 and operation S1002.

In the operation S1001, the UE receives a GNSS measurement command.

In the operation S1002, the UE cancels reporting of (all) GNSS assistance information that has been triggered.

In the operation S1003, the GNSS valid timer of the UE expires.

In the operation S1004, the UE initiates GNSS measurement.

In the operation S1005, the UE is out of uplink synchronization.

In the operation S1006, the UE triggers MAC reset.

In the operation S1007, the UE transmits a MAC PDU and the MAC PDU includes a GNSS assistance information MAC CE.

In some embodiments of the present disclosure, the reporting of the GNSS assistance information triggering SR is proposed.

In some embodiments, after the UE in the RRC connected state triggers the reporting of the GNSS assistance information, if the UE does not have a PUSCH resource or a Narrowband Physical Uplink Shared Channel (NPUSCH) resource available for transmitting the GNSS assistance information, the UE triggers a SR or a Random Access Channel (RACH).

Alternatively, when the UE in the RRC connected state triggers the reporting of GNSS assistance information, the UE triggers SR when the following conditions are satisfied.

Condition 1: The UE does not have PUSCH resource or NPUSCH resource available for new transmission currently.
Condition 2: The UE has a PUSCH or NPUSCH resource available for new transmission currently, but it is determined based on the LCP result that the PUSCH or NPUSCH resource available for new transmission is not able to accommodate the GNSS assistance information MAC CE.

If any one of the above condition 1 or condition 2 is satisfied, the UE triggers SR.

Alternatively, when the UE in the RRC connected state triggers the reporting of GNSS assistance information, the UE triggers SR when the following conditions are satisfied.

Condition 1: The UE does not have PUSCH resource or NPUSCH resource available for new transmission currently.
Condition 2: The UE has a PUSCH or NPUSCH resource available for new transmission currently, but it is determined based on the LCP result that the PUSCH or NPUSCH resource available for new transmission is not able to accommodate the GNSS assistance information MAC CE.
Condition 3: The time interval from a time point at which the UE triggers the reporting of the GNSS assistance information to the current time point has reached or exceeded the third time interval threshold. The third time interval threshold is configured by the network through broadcast or the UE dedicated signaling.

If any one of the above condition 1 and condition 2 is satisfied, and meanwhile condition 3 is satisfied, the UE triggers the SR.

Alternatively, for the SR triggered by the reporting of the GNSS assistance information, if the SR is in a pending state, the condition for the UE to cancel the SR may be as follows.

The UE completes reporting of the GNSS assistance information, that is, the UE transmits a MAC PDU and the MAC PDU includes GNSS assistance information MAC CE, or the UE cancels the reporting of the GNSS assistance information or the UE cancels reporting of all GNSS assistance information.

Alternatively, for the SR triggered by the reporting of the GNSS assistance information, if the SR is in a pending state, that is, case 1: if the UE does not have a valid PUCCH resource for transmitting the SR currently, or case 2: if the number of transmissions of SR corresponding to the SR reaches the maximum number of transmissions of SR, then the UE triggers random access.

Alternatively, for the random access triggered by the above case 1 and/or case 2, if the random access process has not finished currently, the UE stops the random access process when one of the following conditions is satisfied.

The UE receives an uplink grant (UL grant) and the UL grant is not indicated in Msg2, the UE transmits a MAC PDU by using the UL grant, and the MAC PDU includes GNSS assistance information report MAC CE.

Alternatively, the UE receives a GNSS measurement command.

Alternatively, the UE initiates GNSS measurement.

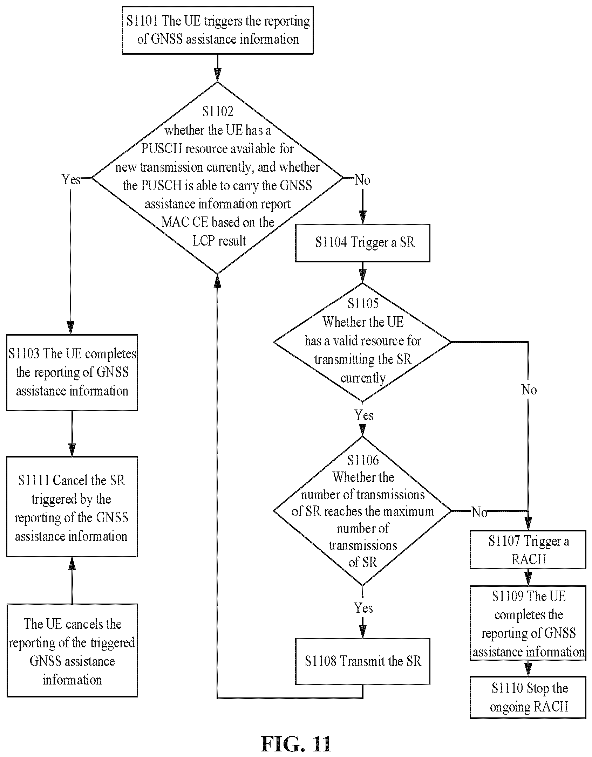

FIG. 11 is a flowchart of a communication method according to another embodiment of the present disclosure. As illustrated in FIG. 11, the method includes the following operations.

In operation S1101, the UE triggers the reporting of GNSS assistance information.

In operation S1102, whether the UE has a PUSCH resource available for new transmission currently is determined, or based on the LCP result, whether the PUSCH is able to carry the GNSS assistance information report MAC CE.

When the result of at least one of the two conditions is YES in the operation S1102, the operation S1103 is performed. When both the results are NO, the operation S1104 is performed.

In operation S1103, the UE completes the reporting of GNSS assistance information.

In operation S1104, a SR is triggered.

After the operation S1104, the operation S1105 may be performed.

In operation S1105: whether the UE has a valid resource for transmitting the SR currently is determined.

In the case that the result is YES, the operation S1106 is performed. In the case that the result is NO, the operation S1107 is performed.

In operation S1106, whether the number of transmissions of SR reaches the maximum number of transmissions of SR is determined.

In the case that the result is YES, the operation S1108 is performed. In the case that the result is NO, the operation S1107 is performed.

In operation S1107, a RACH is triggered.

After the operation S1107, the operation S1109 may be performed.

In operation S1108, the SR is transmitted.

After the operation S1108, the operation S1102 may be performed.

In the operation S1109, the UE completes the reporting of GNSS assistance information.

In operation S1110, the ongoing RACH is stopped.

In some embodiments, after the UE triggers the SR, or triggers the SR and the RACH, the UE completes the reporting of the GNSS assistance information, and then the UE may further perform the following operation S1111. In another embodiment, after the UE cancels the reporting of the GNSS assistance information that has been triggered, the UE may further perform the following operation S1111.

In the operation S1111, the SR triggered by the reporting of the GNSS assistance information is canceled.

The embodiments of the present disclosure disclose a method for reporting GNSS assistance information by a terminal in the NTN. By using this method, the network device can obtain the GNSS assistance information of the UE in time to assist the network in performing GNSS measurement configuration. Introducing the cancellation mechanism of the reporting of GNSS assistance information can avoid unnecessary reporting of the GNSS assistance information and save system resources.

The embodiments of the present disclosure disclose a method for maintaining uplink synchronization of a terminal in the NTN. The method may include at least one of the following operations.

After the UE in the RRC connected state completes the GNSS measurement each time, or when the current GNSS assistance information of the UE changes compared with the most recently reported GNSS assistance information, or when the change amount between the current GNSS assistance information of the UE and the most recently reported GNSS assistance information exceeds a certain threshold, or during the handover process, the UE triggers the reporting of the GNSS assistance information.

When the UE in the RRC connected state receives a GNSS measurement command or initiates GNSS measurement, or when a GNSS valid timer expires or the terminal device is out of an uplink synchronization or the terminal device triggers a MAC reset, the UE cancels reporting of (all) GNSS assistance information that has been triggered.

After the UE in the RRC connected state triggers the reporting of GNSS assistance information, if the UE does not have PUSCH resource or NPUSCH resource available for transmitting the GNSS assistance information, the UE triggers SR or RACH.

In some embodiments of the present disclosure, it is supported that the network device aperiodically triggers the UE to perform GNSS measurements by using the MAC CE. The UE may report the measurement duration required for the GNSS position fix at least during the initial access. The UE in the RRC connected state may report the GNSS validation duration by using the MAC CE.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above detailed description may be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, various embodiments described in the present disclosure and/or the technical features in various embodiments may be arbitrarily combined with the prior art, and the technical solutions obtained after the combination should also fall within the scope of protection of the present disclosure.

It should also be understood that in various method embodiments of the present disclosure, the size of the sequence number of the above processes does not mean the sequence of execution, and the sequence of execution of various processes should be determined by its function and internal logic, and should not constitute any limitation on the implementation of the embodiments of the present disclosure. In addition, in the embodiments of the present disclosure, the terms "downlink", "uplink" and "sidelink" are used to indicate the transmission direction of signals or data. The "downlink" is used to indicate that the transmission direction of signals or data is the first direction transmitted from the station to the UE of the cell. The "uplink" is used to indicate that the transmission direction of signals or data is the second direction transmitted from the UE of the cell to the station. The "sidelink" is used to indicate that the transmission direction of the signal or data is the third direction transmitted from the UE1 to the UE2. For example, "downlink signal" indicates that the transmission direction of the signal is the first direction. In addition, in the embodiments of the present disclosure, the term "and/or" is used for describing one kind of association relationship of association objects, which indicates that there may be three kinds of relationships. Specifically, A and/or B may represent three cases of A exists alone, A and B exist simultaneously, and B exists alone. In addition, the character "/" in the present disclosure generally indicates that there is an "or" relationship between the association objects.

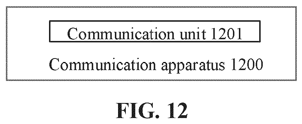

FIG. 12 is a schematic diagram of the structure and composition of a communication apparatus according to an embodiment of the present disclosure. The communication apparatus is applied to a terminal device. As illustrated in FIG. 12, the communication apparatus 1200 includes a communication unit 1201. The communication unit 1201 is configured to trigger a reporting of first GNSS assistance information.

In some embodiments, the communication apparatus 1200 further includes a determining unit. The determining unit is configured to determine the first GNSS assistance information.

In some embodiments, the first GNSS assistance information includes at least one of the first GNSS position fix time duration for measurement or the first GNSS validation duration.

In some embodiments, the first GNSS assistance information is carried by a RRC signaling, and/or the first GNSS assistance information is carried by a MAC CE.

In some embodiments, the communication unit 1201 is further configured to trigger the reporting of the first GNSS assistance information when a GNSS measurement is completed each time in a RRC connected state.

In some embodiments, the communication unit 1201 is further configured to receive the first indication information. The first indication information instructs the terminal device to trigger the reporting of the first GNSS assistance information when the GNSS measurement is completed each time in the RRC connected state, or the first indication information instructs the terminal device to trigger the reporting of the first GNSS assistance information when a current GNSS measurement is completed in the RRC connected state.

In some embodiments, the communication unit 1201 is further configured to trigger the reporting of the GNSS assistance information when the GNSS measurement is completed each time in the RRC connected state and a downlink synchronization and/or an uplink synchronization is obtained.

In some embodiments, the communication unit 1201 is further configured to, when the first GNSS assistance information is different from the second GNSS assistance information most recently reported by the terminal device and/or a change amount between the first GNSS assistance information and the second GNSS assistance information most recently reported by the terminal device exceeds or reaches the first threshold, trigger the reporting of the first GNSS assistance information.

In some embodiments, the communication unit 1201 is further configured to receive the second indication information. The second indication information indicates a trigger condition for the reporting of the first GNSS assistance information. The trigger condition includes that the first GNSS assistance information is different from the second GNSS assistance information most recently reported by the terminal device and/or a change amount between the first GNSS assistance information and the second GNSS assistance information most recently reported by the terminal device exceeds or reaches the first threshold.

In some embodiments, the first GNSS assistance information includes: the first GNSS position fix time duration for measurement and the first GNSS validation duration. The second GNSS assistance information includes: the second GNSS position fix time duration for measurement and the second GNSS validation duration. The first threshold includes the second threshold and/or the third threshold. The communication unit 1201 is further configured to:

The communication unit 1201 is further configured to: when the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold, trigger a reporting of the first GNSS position fix time duration for measurement, or trigger the reporting of the first GNSS assistance information; and/or, when a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold, trigger a reporting of the first GNSS validation duration, or trigger the reporting of the first GNSS assistance information.

In some embodiments, the first threshold is transmitted by a network device to the terminal device, or the first threshold is determined by the terminal device according to a pre-configuration, or the first threshold is agreed by a protocol.

In some embodiments, the communication unit 1201 is further configured to trigger the reporting of the first GNSS assistance information during a handover process.

In some embodiments, the communication unit 1201 is further configured to receive the third indication information before the handover process or during the handover process. The third indication information instructs the terminal device to trigger the reporting of the first GNSS assistance information.

In some embodiments, the communication unit 1201 is further configured to trigger the reporting of the first GNSS assistance information when the terminal device is in a downlink synchronization and/or an uplink synchronization with a target cell.

In some embodiments, the communication unit 1201 is further configured to cancel the reporting of the first GNSS assistance information that has been triggered.

In some embodiments, the communication unit 1201 is further configured to cancel the reporting of the first GNSS assistance information that has been triggered when at least one of following conditions is satisfied: the terminal device receives a GNSS measurement command; a GNSS valid timer of the terminal device expires; the terminal device initiates a GNSS measurement; the terminal device is out of an uplink synchronization; the terminal device triggers a MAC reset; and the terminal device transmits a MAC PDU. The MAC PDU includes a GNSS assistance information MAC CE.

In some embodiments, the communication unit 1201 is further configured to triggers a SR and/or triggers a random access, when at least one of following conditions is satisfied.

The terminal device has triggered the reporting of the first GNSS assistance information, and there is no PUSCH resource available for transmitting the first GNSS assistance information currently.

The terminal device has triggered the reporting of the first GNSS assistance information, there is a PUSCH resource available for transmitting the first GNSS assistance information currently, and the PUSCH resource is determined is determined based on a LCP result that the PUSCH resource is not able to accommodate the first GNSS assistance information or the PUSCH resource is not able to accommodate the first GNSS assistance information MAC CE.

A time interval, from a time point at which the terminal device triggers the reporting of the first GNSS assistance information to a current time point, is greater than or equal to the fourth threshold.

In some embodiments, the communication unit 1201 is further configured to cancel the SR that has been triggered and is in a pending state when one of following conditions is satisfied. The terminal device completes the reporting of the first GNSS assistance information. The terminal device cancels the reporting of the first GNSS assistance information. The terminal device cancels reporting of all of GNSS assistance information.

In some embodiments, the communication unit 1201 is further configured to trigger a random access when at least one of the following conditions is satisfied. The terminal device does not have a PUCCH resource or PUSCH resource available for transmitting the SR. The number of transmissions corresponding to the SR reaches a maximum number of transmissions.

In some embodiments, the communication unit 1201 is further configured to stop or cancel the random access that has been triggered or is ongoing when one of following conditions is satisfied. The terminal device receives an uplink grant, and the terminal device transmits the first GNSS assistance information by using the uplink grant. The terminal device receives a GNSS measurement command. The terminal device initiates a GNSS measurement.

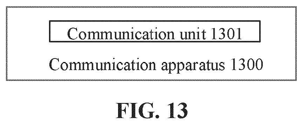

FIG. 13 is a schematic diagram of the structure and composition of another communication apparatus according to an embodiment of the present disclosure. The communication apparatus is applied to a terminal device. As illustrated in FIG. 13, the communication apparatus 1300 includes a communication unit 1301. The communication unit 1301 is configured to receive first GNSS assistance information. The first GNSS assistance information is triggered and reported by the terminal device.

In some embodiments, the communication apparatus further includes a determining unit 1300. The determining unit is configured to determine a resource for transmitting the first GNSS assistance information. The communication unit 1301 is further configured to receive the first GNSS assistance information through the resource for transmitting the first GNSS assistance information.

In some embodiments, the first GNSS assistance information includes at least one of the first GNSS position fix time duration for measurement or the first GNSS validation duration.

In some embodiments, the first GNSS assistance information is carried by a RRC signaling, and/or the first GNSS assistance information is carried by a MAC CE.

In some embodiments, the first GNSS assistance information is triggered and reported by the terminal device when a GNSS measurement is completed each time in a RRC connected state.

In some embodiments, the communication unit 1301 is further configured to transmit the first indication information. The first indication information instructs the terminal device to trigger the reporting of the first GNSS assistance information when the GNSS measurement is completed each time in the RRC connected state, or the first indication information instructs the terminal device to trigger the reporting of the first GNSS assistance information when a current GNSS measurement is completed in the RRC connected state.

In some embodiments, the first GNSS assistance information is triggered and reported by the terminal device when the GNSS measurement is completed each time in the RRC connected state and a downlink synchronization and/or an uplink synchronization is obtained.

In some embodiments, the first GNSS assistance information is triggered and reported by the terminal device when the first GNSS assistance information is different from the second GNSS assistance information most recently reported by the terminal device and/or a change amount between the first GNSS assistance information and the second GNSS assistance information most recently reported by the terminal device exceeds or reaches the first threshold.

In some embodiments, the communication unit 1301 is further configured to transmit the second indication information. The second indication information indicates a trigger condition for the reporting of the first GNSS assistance information. The trigger condition includes that the first GNSS assistance information is different from the second GNSS assistance information most recently reported by the terminal device and/or a change amount between the first GNSS assistance information and the second GNSS assistance information most recently reported by the terminal device exceeds or reaches the first threshold.

In some embodiments, the first GNSS assistance information includes: the first GNSS position fix time duration for measurement and the first GNSS validation duration, the second GNSS assistance information includes: the second GNSS position fix time duration for measurement and the second GNSS validation duration. The first threshold includes the second threshold and/or the third threshold.

The first GNSS position fix time duration for measurement or the first GNSS assistance information is triggered and reported by the terminal device when the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold, and/or the first GNSS validation duration or the first GNSS assistance information is triggered and reported by the terminal device when a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold.

In some embodiments, the communication unit 1301 is further configured to transmit the first threshold.

In some embodiments, the first GNSS assistance information is triggered and reported by the terminal device during a handover process.

In some embodiments, the communication unit 1301 is further configured to transmit the third indication information before the handover process or during the handover process. The third indication information instructs the terminal device to trigger the reporting of the first GNSS assistance information.

In some embodiments, the first GNSS assistance information is triggered and reported by the terminal device when the terminal device is in a downlink synchronization and/or an uplink synchronization with a target cell.

In some embodiments, the communication unit 1301 is further configured to transmit a GNSS measurement command.

In some embodiments, the communication unit 1301 is further configured to: receive a SR, allocate the first uplink resource, and receive the first GNSS assistance information transmitted through the first uplink resource.

In some embodiments, the communication unit 1301 is further configured to: allocate the second uplink resource, and receives the first GNSS assistance information transmitted through the second uplink resource.

Those skilled in the art should understand that the related description of the above communication apparatus according to the embodiments of the present disclosure may be understood with reference to the related description of the communication method according to the embodiments of the present disclosure.

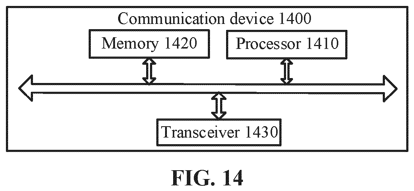

FIG. 14 is a schematic structural diagram of a communication device 1400 according to an embodiment of the present disclosure. The communication device 1400 may include one of the terminal device or the network device. The communication device 1400 illustrated in FIG. 14 includes a processor 1410 and a memory 1420. The memory 1420 is configured to store computer programs executable on the processor 1410. The processor 1410 is configured to implement the communication method in the above any one embodiment when executing the program. The memory 1420 may be a separate device independent of the processor 1410 or may be integrated in the processor 1410.

In some embodiments, as illustrated in FIG. 14, the communication device 1400 may further include a transceiver 1430. The processor 1410 may control the transceiver 1430 to communicate with other devices, specifically, may transmit information or data to or receive information or data transmitted by other devices. The transceiver 1430 may include a transmitter and a receiver. The transceiver 1430 may further include one or more antennas.

In some embodiments, the communication device 1400 may specifically be the network device of the embodiment of the present disclosure, and the communication device 1400 may implement corresponding processes implemented by the network device in various methods of the embodiments of the present disclosure, which will not be described herein for the sake of brevity.

Alternatively, the communication device 1400 may specifically be the terminal device of the embodiment of the present disclosure, and the communication device 1400 may implement corresponding processes implemented by the terminal device in various methods of the embodiments of the present disclosure, which will not be described herein for the sake of brevity.

Embodiments of the present disclosure further provide a computer storage medium for storing one or more computer program. The one or more computer program may be executed by the one or more processors to implement the communication method in the any one embodiment.

In some embodiments, the computer readable storage medium may be applied to the network device or terminal device in the embodiments of the present disclosure, and the computer program causes the computer to execute the corresponding processes implemented by the network device or terminal device in various methods of the embodiments of the present disclosure, which will not be described herein for the sake of brevity.

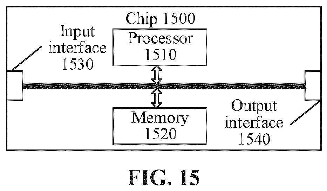

FIG. 15 is a schematic structural diagram of a chip according to an embodiment of the present disclosure. The chip 1500 illustrated in FIG. 15 includes a processor 1510. The processor 1510 may invoke and execute a computer program from a memory to implement the method in any one embodiment.

In some embodiments, as illustrated in FIG. 15, the chip 1500 may further include a memory 1520. The processor 1510 may invoke and execute a computer program from the memory 1520 to implement the methods in the embodiments of the present disclosure.

The memory 1520 may be a separate device independent of the processor 1510 or may be integrated in the processor 1510.

In some embodiments, the chip 1500 may further include an input interface 1530. The processor 1510 may control the input interface 1530 to communicate with other devices or chips, specifically, may acquire information or data transmitted by other devices or chips.

In some embodiments, the chip 1500 may further include an output interface 1540. The processor 1510 may control the output interface 1540 to communicate with other devices or chips, specifically, may output information or data to other devices or chips.

In some embodiments, the chip may be applied to the network device in the embodiment of the present disclosure, and the chip may implement the corresponding processes implemented by the network device in various methods of the embodiments of the present disclosure, which will not be described herein for the sake of brevity.

**In** some embodiments, the chip may be applied to the terminal device in the embodiment of the present disclosure, and the chip may implement the corresponding processes implemented by the terminal device in various methods of the embodiments of the present disclosure, which will not be described herein for the sake of brevity.

It should be understood that the chip mentioned in the embodiments of the present disclosure may also be referred to as a system level chip, a system chip, a chip system or a system-on-chip or the like.

Embodiments of the present disclosure further provide a computer program product. The computer program product includes a computer storage medium. The computer storage medium stores a computer program. The computer program includes instructions executable by at least one processor. When the instructions are executed by the at least one processor, the communication method in any one embodiment of the present disclosure is implemented.

In some embodiments, the computer program product may be applied to the terminal device or the network device in the embodiments of the present disclosure, and the computer program instructions cause the computer to perform corresponding processes implemented by the terminal device or the network device in various methods of the embodiments of the present disclosure, which will not be described herein for the sake of brevity.

Alternatively, the computer program product in the embodiment of the present disclosure may also be referred to as a software product in other embodiments.

The embodiments of the present disclosure further provide a computer program. The computer program causes a computer to perform the communication method in any one of the embodiments of the present disclosure.

In some embodiments, the computer program may be applied to the terminal device or the network device in the embodiments of the present disclosure, and when the computer program is executed on the computer, the computer performs corresponding processes implemented by the terminal device or the network device in various methods of the embodiments of the present disclosure, which will not be described herein for the sake of brevity.

The processor, communication apparatus, or chip of the embodiments of the present disclosure may be an integrated circuit chip having signal processing capabilities. In the implementation process, the operations of the above method embodiments may be completed by integrated logic circuits of hardware in the processor or instructions in the form of software. The above processor, communication apparatus, or chip may include an integration of any one or more of the following: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing units (NPU), a controller, a microcontroller, a microprocessor, a programmable logic device, a discrete gate or transistor logic device, and a discrete hardware component. The methods, operations, and logical block diagrams disclosed in the embodiments of the present disclosure may be implemented or executed. The general purpose processor may be a microprocessor or the processor may be any conventional processor or the like. The operations of the methods disclosed in connection with the embodiments of the present disclosure may be directly embodied as execution by the hardware decoding processor, or may be completed by combining hardware and software modules in the decoding processor. The software module may be located in a storage medium mature in the art, such as a Random Access Memory (RAM), a flash memory, Read-Only Memory (ROM), a Programmable ROM (PROM), or an electrically erasable programmable memory, a register, etc. The storage medium is located in the memory, and the processor reads the information in the memory, and combines its hardware to complete the operations of the above methods.

It is understood that the memory or computer storage medium in the embodiments of the present disclosure may be a volatile memory or a non-volatile memory, or may include both volatile and non-volatile memory. The non-volatile memory may be a ROM, a PROM, an Erasable PROM (EPROM), an Electrically EPROM (EEPROM), or a flash memory. The volatile memory may be a RAM, which serves as an external cache. By way of illustration, but not limitation, many forms of RAM are available, such as a Static RAM (SRAM), Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory or computer storage medium is illustrative but not limiting. For example, the memory in the embodiments of the present disclosure may also be a SRAM, a DRAM, a SDRAM, a DDR SDRAM, an ESDRAM, a SLDRAM, a DR RAM, etc. That is, the memory in the embodiments of the present disclosure is intended to include, but is not limited to, these and any other suitable type of memory.

Those of ordinary skill in the art will appreciate that the elements and algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present application.

Those skilled in the art can clearly understand that for convenience and conciseness of the description, the specific working processes of the systems, apparatus, and units described above may refer to the corresponding processes in the aforementioned method embodiments, which will not be described herein for the sake of brevity.

In several embodiments provided herein, it should be understood that the disclosed systems, apparatuses, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, apparatus or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the present embodiment.

In addition, various function units in various embodiments of the present disclosure may be integrated in one processing unit, each unit may be physically present alone, or two or more units may be integrated in one unit.

In any one embodiment of the present disclosure, a time interval, a time period, a time range, a time period, a time window, etc. may include all of the endpoint times, or may include part of the endpoint times (for example, including the left endpoint time but not including the right endpoint time, or including the right endpoint time but not including the left endpoint time), or may not include the endpoint times.

When implemented in the form of software function units, and sold or used as stand-alone products, the functions may be stored in a computer readable storage medium. With this understanding, the technical solution of the present disclosure in essence or in part contributing to the prior art may be embodied in the form of a software product. The computer software product is stored in a storage medium, and includes instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

**Claims**

1. A communication method, comprising:
   triggering, by a terminal device, a reporting of first Global Navigation Satellite System (GNSS) assistance information.

2. The method of claim 1, wherein the first GNSS assistance information comprises at least one of a first GNSS position fix time duration for measurement or a first GNSS validation duration.

3. The method of claim 1 or 2, wherein the first GNSS assistance information is carried by a Radio Resource Control (RRC) signaling, and/or the first GNSS assistance information is carried by a Medium Access Control (MAC) Control Element (CE).

4. The method of any one of claims 1 to 3, wherein triggering, by the terminal device, the reporting of the first GNSS assistance information comprises:
   when a GNSS measurement is completed each time by the terminal device in a RRC connected state, triggering the reporting of the first GNSS assistance information.

5. The method of claim 4, further comprising:
   receiving, by the terminal device, first indication information, wherein the first indication information instructs the terminal device in the RRC connected state to trigger the reporting of the first GNSS assistance information when the GNSS measurement is completed each time, or the first indication information instructs the terminal device in the RRC connected state to trigger the reporting of the first GNSS assistance information when a current GNSS measurement is completed.

**6.** The method of claim 4 or 5, wherein when the GNSS measurement is completed each time by the terminal device in the RRC connected state, triggering the reporting of the first GNSS assistance information comprises:
when the GNSS measurement is completed each time by the terminal device in the RRC connected state and a downlink synchronization and/or an uplink synchronization is obtained, triggering the reporting of the GNSS assistance information.

**7.** The method of any one of claims 1 to 3, wherein triggering, by the terminal device, the reporting of the first GNSS assistance information comprises:
when the first GNSS assistance information is different from second GNSS assistance information most recently reported by the terminal device and/or a change amount between the first GNSS assistance information and the second GNSS assistance information most recently reported by the terminal device exceeds or reaches a first threshold, triggering, by the terminal device, the reporting of the first GNSS assistance information.

**8.** The method of claim 7, further comprising:
receiving, by the terminal device, second indication information, wherein the second indication information indicates a trigger condition for the reporting of the first GNSS assistance information, and the trigger condition comprises that the first GNSS assistance information is different from the second GNSS assistance information most recently reported by the terminal device and/or a change amount between the first GNSS assistance information and the second GNSS assistance information most recently reported by the terminal device exceeds or reaches the first threshold.

**9.** The method of claim 7 or 8, wherein the first GNSS assistance information comprises: a first GNSS position fix time duration for measurement and a first GNSS validation duration, the second GNSS assistance information comprises: a second GNSS position fix time duration for measurement and a second GNSS validation duration, and the first threshold comprises a second threshold and/or a third threshold,
wherein when the first GNSS assistance information is different from the second GNSS assistance information most recently reported by the terminal device and/or the change amount between the first GNSS assistance information and the second GNSS assistance information most recently reported by the terminal device exceeds or reaches the first threshold, triggering, by the terminal device, the reporting of the first GNSS assistance information comprises:

   when the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold, triggering, by the terminal device, a reporting of the first GNSS position fix time duration for measurement, or triggering, by the terminal device, the reporting of the first GNSS assistance information; and/or
   when a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold, triggering, by the terminal device, a reporting of the first GNSS validation duration, or triggering, by the terminal device, the reporting of the first GNSS assistance information.

**10.** The method of any one of claims 7 to 9, wherein the first threshold is transmitted by a network device to the terminal device, or the first threshold is determined by the terminal device according to a pre-configuration, or the first threshold is agreed by a protocol.

**11.** The method of any one of claims 1 to 3, wherein triggering, by the terminal device, the reporting of the first GNSS assistance information comprises:
triggering, by the terminal device, the reporting of the first GNSS assistance information during a handover process.

**12.** The method of claim 11, further comprising:
receiving, by the terminal device, third indication information before the handover process or during the handover process, wherein the third indication information instructs the terminal device to trigger the reporting of the first GNSS assistance information.

**13.** The method of claim 11 or 12, wherein triggering the reporting of the first GNSS assistance information comprises:
triggering, by the terminal device, the reporting of the first GNSS assistance information when the terminal device is in a downlink synchronization and/or an uplink synchronization with a target cell.

14. The method of any one of claims 1 to 13, further comprising:
    canceling, by the terminal device, the reporting of the first GNSS assistance information that has been triggered.

15. The method of claim 14, wherein canceling, by the terminal device, the reporting of the first GNSS assistance information that has been triggered comprises:
    canceling, by the terminal device, the reporting of the first GNSS assistance information that has been triggered when at least one of following conditions is satisfied:

    the terminal device receives a GNSS measurement command;
    a GNSS valid timer of the terminal device expires;
    the terminal device initiates a GNSS measurement;
    the terminal device is out of an uplink synchronization;
    the terminal device triggers a MAC reset; or
    the terminal device transmits a MAC PDU, wherein the MAC Protocol Data Unit (PDU) comprises a GNSS assistance information MAC CE.

16. The method of any one of claims 1 to 15, further comprising:
    when at least one of following condition is satisfied, triggering, by the terminal device, a Scheduling Request (SR) and/or triggering, by the terminal device, a random access:

    the terminal device has triggered the reporting of the first GNSS assistance information, and there is no Physical Uplink Shared Channel (PUSCH) resource available for transmitting the first GNSS assistance information currently;
    the terminal device has triggered the reporting of the first GNSS assistance information, and there is a PUSCH resource available for transmitting the first GNSS assistance information currently, and the PUSCH resource is determined based on a Logical Channel Prioritization (LCP) result that the PUSCH resource is not able to accommodate the first GNSS assistance information or the PUSCH resource is not able to accommodate the first GNSS assistance information MAC CE; or
    a time interval, from a time point at which the terminal device triggers the reporting of the first GNSS assistance information to a current time point, is greater than or equal to a fourth threshold.

17. The method of claim 16, further comprising:
    canceling, by the terminal device, the SR that has been triggered and is in a pending state when one of following conditions is satisfied:

    the terminal device completes the reporting of the first GNSS assistance information;
    the terminal device cancels the reporting of the first GNSS assistance information; and
    the terminal device cancels reporting of all of GNSS assistance information.

18. The method of claim 16 or 17, wherein after triggering, by the terminal device, the SR, the method further comprises:
    triggering, by the terminal device, a random access when at least one of following conditions is satisfied:

    the terminal device has no Physical Uplink Control Channel (PUCCH) resource or PUSCH resource available for transmitting the SR; or
    a number of transmissions corresponding to the SR reaches a maximum number of transmissions.

19. The method of claim 18, further comprising:
    stopping or canceling, by the terminal device, the random access that has been triggered or is ongoing when one of following conditions is satisfied:

    the terminal device receives an uplink grant, and the terminal device transmits the first GNSS assistance information by using the uplink grant;
    the terminal device receives a GNSS measurement command; and
    the terminal device initiates a GNSS measurement.

20. A communication method, comprising:

receiving, by a network device, first Global Navigation Satellite System (GNSS) assistance information, wherein the first GNSS assistance information is triggered and reported by a terminal device.

21. The method of claim 20, wherein the first GNSS assistance information comprises at least one of a first GNSS position fix time duration for measurement or a first GNSS validation duration.

22. The method of claim 20 or 21, wherein the first GNSS assistance information is carried by a Radio Resource Control (RRC) signaling, and/or the first GNSS assistance information is carried by a Medium Access Control (MAC) Control Element (CE).

23. The method of any one of claims 20 to 22, wherein the first GNSS assistance information is triggered and reported when a GNSS measurement is completed each time by the terminal device in a RRC connected state.

24. The method of claim 23, further comprising:
transmitting, by the network device, first indication information, wherein the first indication information instructs the terminal device in the RRC connected state to trigger the reporting of the first GNSS assistance information when the GNSS measurement is completed each time, or the first indication information instructs the terminal device in the RRC connected state to trigger the reporting of the first GNSS assistance information when a current GNSS measurement is completed.

25. The method of claim 23 or 24, wherein the first GNSS assistance information is triggered and reported when the GNSS measurement is completed each time by the terminal device in the RRC connected state and a downlink synchronization and/or an uplink synchronization is obtained.

26. The method of any one of claims 20 to 22, wherein the first GNSS assistance information is triggered and reported by the terminal device when the first GNSS assistance information is different from second GNSS assistance information most recently reported by the terminal device and/or a change amount between the first GNSS assistance information and the second GNSS assistance information most recently reported by the terminal device exceeds or reaches a first threshold.

27. The method of claim 26, further comprising:
transmitting, by the network device, second indication information, wherein the second indication information indicates a trigger condition for the reporting of the first GNSS assistance information, and the trigger condition comprises that the first GNSS assistance information is different from the second GNSS assistance information most recently reported by the terminal device and/or a change amount between the first GNSS assistance information and the second GNSS assistance information most recently reported by the terminal device exceeds or reaches the first threshold .

28. The method of claim 26 or 27, wherein the first GNSS assistance information comprises: a first GNSS position fix time duration for measurement and a first GNSS validation duration, the second GNSS assistance information comprises: a second GNSS position fix time duration for measurement and a second GNSS validation duration, and the first threshold comprises a second threshold and/or a third threshold,

the first GNSS position fix time duration for measurement or the first GNSS assistance information is triggered and reported by the terminal device when the first GNSS position fix time duration for measurement is different from the second GNSS position fix time duration for measurement most recently reported by the terminal device and/or a change amount between the first GNSS position fix time duration for measurement and the second GNSS position fix time duration for measurement most recently reported by the terminal device exceeds or reaches the second threshold; and/or
the first GNSS validation duration or the first GNSS assistance information is triggered and reported by the terminal device when a GNSS position expiration time point corresponding to the first GNSS validation duration is different from a GNSS position expiration time point corresponding to the second GNSS validation duration most recently reported by the terminal device and/or a change amount between the GNSS position expiration time point corresponding to the first GNSS validation duration and the GNSS position expiration time point corresponding to the second GNSS validation duration most recently reported by the terminal device exceeds or reaches the third threshold.

29. The method of any one of claims 26 to 28, further comprising:

transmitting, by the network device, the first threshold.

30. The method of any one of claims 20 to 22, wherein the first GNSS assistance information is triggered and reported by the terminal device during a handover process.

31. The method of claim 30, further comprising:
transmitting, by the network device, third indication information before the handover process or during the handover process, wherein the third indication information instructs the terminal device to trigger the reporting of the first GNSS assistance information.

32. The method of claim 30 or 31, wherein the first GNSS assistance information is triggered and reported by the terminal device when the terminal device is in a downlink synchronization and/or an uplink synchronization with a target cell.

33. The method of any one of claims 20 to 32, further comprising:
transmitting, by the network device, a GNSS measurement command.

34. The method of any one of claims 20 to 33, further comprising:

receiving, by the network device, a Scheduling Request (SR); and
allocating, by the network device, a first uplink resource;
wherein receiving, by the network device, the first GNSS assistance information comprises:
receiving, by the network device, the first GNSS assistance information transmitted through the first uplink resource.

35. The method of any one of claims 20 to 33, further comprising:

allocating, by the network device, a second uplink resource,
wherein receiving, by the network device, the first GNSS assistance information comprises:
receiving, by the network device, the first GNSS assistance information transmitted through the second uplink resource.

36. A communication apparatus, comprising:
a communication unit, configured to trigger a reporting of first Global Navigation Satellite System (GNSS) assistance information.

37. A communication apparatus, comprising:
a communication unit, configured to receive first Global Navigation Satellite System (GNSS) assistance information, wherein the first GNSS assistance information is triggered and reported by a terminal device.

38. A communication device, comprising a processor and a memory,

wherein the memory is configured to store a computer program executable on the processor, and
the processor is configured to perform the program to implement the method of any one of claims 1 to 19 or any one of claims 20 to 35.

39. A computer storage medium storing one or more program executable by one or more processors to implement that method of any one of claims 1 to 19 or any one of claims 20 to 35.

40. A chip, comprising a processor, wherein the processor is configured to invoke and execute a computer program from a memory to implement the method of any one of claims 1 to 19 or any one of claims 20 to 35.

41. A computer program product, comprising a computer storage medium, wherein the computer storage medium stores a computer program comprising instructions executable by at least one processor that, when executed by the at least one processor, implement the method of any one of claims 1 to 19 or any one of claims 20 to 35.

42. A computer program causing a computer to perform the method of any one of claims 1 to 19 or any one of claims 20 to 35.

100

120 122

121

110

110

**FIG. 1**

FIG. 2

320

310

330

**FIG. 3**

Satellite

Feeder link

Service link

Gateway

Data network

**FIG. 4**

**FIG. 5**

DL symbol timing at gNB

DL symbol timing as received at UE close to gNB, after a short propagation delay $T_{P1}$

$T_{P1}$

UL transmitted symbol timing

UL symbol timing as received at gNB

$T_{P1}$

DL symbol timing as received at UE farther from gNB, after a longer propagation delay $T_{P2}$

$T_{P2}$

UL transmitted symbol timing
UL symbol timing as received at gNB

$T_{P2}$

Timing misalignment at gNB

time

(a)

Timing advance=$2T_{P1}$

Different UE usually has different Timing advance

$T_{P1}$

Timing advance=$2T_{P2}$

$T_{P2}$

The DL and UL timing is aligned at gNB

$T_{P2}$

UL transmissions time-aligned at gNB

Time

(b)

**FIG. 6**

EP 4 614 893 A1

A terminal device triggers a reporting of the first GNSS assistance information — S701

**FIG. 7**

A network device receives first GNSS assistance information. The first GNSS assistance information is triggered and reported by a terminal device — S801

**FIG. 8**

S901 The UE completes the GNSS measurement

S904 The network configures a trigger event/trigger condition for reporting of the GNSS assistance information

S906 The UE performs handover

S905 The current GNSS assistance information of the UE changes compared with the most recently reported GNSS assistance information, or the change amount between the current GNSS assistance information of the UE and the most recently reported GNSS assistance information exceeds a certain threshold

S902 The network device configures the UE to report the GNSS assistance information

S907 The network device configures the UE to report the GNSS assistance information

S903 The UE triggers the reporting of GNSS assist information

FIG. 9

| S1001 The UE receives a GNSS measurement command | S1003 The GNSS valid timer of the UE expires | S1004 The UE initiates GNSS measurement | S1005 The UE is out of uplink synchronization | S1006 The UE triggers MAC reset | S1007 The UE transmits a MAC PDU and the MAC PDU includes a GNSS assistance information MAC CE |
|---|---|---|---|---|---|

S1002 The UE cancels reporting of triggered GNSS assistance information or all GNSS assistance information that has been triggered

**FIG. 10**

S1101 The UE triggers the reporting of GNSS assistance information

S1102 whether the UE has a PUSCH resource available for new transmission currently, and whether the PUSCH is able to carry the GNSS assistance information report MAC CE based on the LCP result

Yes

No

S1104 Trigger a SR

S1103 The UE completes the reporting of GNSS assistance information

S1105 Whether the UE has a valid resource for transmitting the SR currently

Yes

No

S1111 Cancel the SR triggered by the reporting of the GNSS assistance information

S1106 Whether the number of transmissions of SR reaches the maximum number of transmissions of SR

No

S1107 Trigger a RACH

The UE cancels the reporting of the triggered GNSS assistance information

Yes

S1108 Transmit the SR

S1109 The UE completes the reporting of GNSS assistance information

S1110 Stop the ongoing RACH

**FIG. 11**

```
┌─────────────────────────────────────┐
│  ┌─────────────────────────────┐    │
│  │ Communication unit 1201     │    │
│  └─────────────────────────────┘    │
│  Communication apparatus 1200       │
└─────────────────────────────────────┘
```

FIG. 12

| Communication unit 1301 |
| Communication apparatus 1300 |

**FIG. 13**

Communication device 1400

Memory 1420    Processor 1410

Transceiver 1430

**FIG. 14**

FIG. 15

# EP 4 614 893 A1

## INTERNATIONAL SEARCH REPORT

| | International application No. |
|---|---|
| | **PCT/CN2022/129646** |

| A. | CLASSIFICATION OF SUBJECT MATTER |
|---|---|

H04L27/00(2006.01)i

According to International Patent Classification (IPC) or to both national classification and IPC

| B. | FIELDS SEARCHED |
|---|---|

Minimum documentation searched (classification system followed by classification symbols)

IPC： H04L H04W

Documentation searched other than minimum documentation to the extent that such documents are included in the fields searched

Electronic data base consulted during the international search (name of data base and, where practicable, search terms used)

CNTXT; ENTXTC; DWPI; CNKI: 导航卫星系统, 辅助信息, 上报, 触发, 定位, 测量时间, 有效时间, 有效期, GNSS, assisted information, report+, trigger+, position+, measurement time, validity duration

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114503783 A (BEIJING XIAOMI MOBILE SOFTWARE CO., LTD.) 13 May 2022 (2022-05-13) description, paragraphs [0170]-[0185] | 1-42 |
| A | CN 111434159 A (SONY CORP. et al.) 17 July 2020 (2020-07-17) entire document | 1-42 |
| A | CN 114222931 A (BEIJING XIAOMI MOBILE SOFTWARE CO., LTD.) 22 March 2022 (2022-03-22) entire document | 1-42 |
| A | WO 2022127629 A1 (CHINA MOBILE COMMUNICATION LTD., RESEARCH INSTITUTE et al.) 23 June 2022 (2022-06-23) entire document | 1-42 |

☐ Further documents are listed in the continuation of Box C.     ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2023** | **16 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/129646**

| Patent document cited in search report | | | Publication date (day/month/year) | Patent family member(s) | | | Publication date (day/month/year) |
|---|---|---|---|---|---|---|---|
| CN | 114503783 | A | 13 May 2022 | None | | | |
| CN | 111434159 | A | 17 July 2020 | US | 2020314795 | A1 | 01 October 2020 |
| | | | | KR | 20200089681 | A | 27 July 2020 |
| | | | | EP | 3701755 | A1 | 02 September 2020 |
| | | | | JP | 2021505077 | A | 15 February 2021 |
| | | | | WO | 2019106045 | A1 | 06 June 2019 |
| | | | | US | 2021306980 | A1 | 30 September 2021 |
| CN | 114222931 | A | 22 March 2022 | None | | | |
| WO | 2022127629 | A1 | 23 June 2022 | CN | 114630345 | A | 14 June 2022 |

Form PCT/ISA/210 (patent family annex) (July 2022)